(19) 

Europäisches
Patentamt
European
Patent Office
Office européen
des brevets

(11) **EP 2 521 360 A1**

(12) **EUROPEAN PATENT APPLICATION**
published in accordance with Art. 153(4) EPC

(43) Date of publication:
**07.11.2012 Bulletin 2012/45**

(51) Int Cl.:
**H04N 13/00** *(2006.01)*

(21) Application number: **11849318.8**

(22) Date of filing: **02.12.2011**

(86) International application number:
**PCT/JP2011/077994**

(87) International publication number:
**WO 2012/081427 (21.06.2012 Gazette 2012/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2010 JP 2010279949**

(71) Applicant: **Sony Corporation
Tokyo 108-0075 (JP)**

(72) Inventors:
• **TSUKAGOSHI, Ikuo
Tokyo 108-0075 (JP)**
• **HASHIMOTO, Katsunori
Tokyo 108-0075 (JP)**

(74) Representative: **Beder, Jens et al
Mitscherlich & Partner
Sonnenstraße 33
80331 München (DE)**

(54) **TRANSMISSION DEVICE, TRANSMISSION METHOD, RECEIVING DEVICE, AND RECEIVING METHOD**

(57) [Object] To enable suitable automatic switching of shutter glasses when receiving a multiplexed stream including, in a time sharing manner, a first video stream in which 2-dimensional image data has been inserted and a second video stream in which 3-dimensional image data has been inserted, and performing image display.

[Solution] Advance information obtained from a transport stream is inserted at the transmission side with leeway of time T as to the switching timing between the first video stream and the second video stream. Based on this advance information, a shutter mode switching command is transmitted from a shutter control unit to shutter glasses, at a timing earlier than shutter mode switching timing. Based on this shutter mode switching command, the shutter mode is switched at the shutter glasses in accordance with the switching timing from the 3-dimensional image display to the 2-dimensional image display.

FIG. 3

EP 2 521 360 A1

## Description

Technical Field

The present invention relates to a transmission device, transmission method, reception device, and reception method, and more particularly relates to transmission device and the like which transmits a multiplexed stream including, in a time-sharing manner, a video stream into which 2-dimensional data has been inserted and a video stream into which 3-dimensional image data has been inserted.

Background Art

Conventionally, as a system for displaying stereoscopic video, various arrangements are known. For example, there is known a method wherein a left eye image and a right eye image with disparity are alternately displayed on a display with a predetermined cycle, and the left eye image and right eye image are viewed with shutter glasses having liquid crystal shutters driven synchronously with the display, as described in PTL 1 through 3.

Citation List

Patent Literature

PTL 1: Japanese Unexamined Patent Application Publication No. 9-138384
PTL 2: Japanese Unexamined Patent Application Publication No. 2000-36969
PTL 3: Japanese Unexamined Patent Application Publication No. 2003-45343

Summary of Invention

Technical Problem

In the event of transmitting contents such as television programs from a broadcasting station to the television receiver of a user, there can be conceived transmitting while switching between 3-dimensional (3D) image data and 2-dimensional (2D) image data. For example, there can be conceived a case of transmitting 3-dimensional image data for the program itself, and transmitting 2-dimensional image data for CMs (commercial message). In this case, a multiplexed stream including, in a time sharing manner, video streams in which 2-dimensional image data has been inserted and video streams in which 3-dimensional image data has been inserted, is transmitted from the broadcasting station.

A video stream includes signaling information (ES layer signaling information) indicating whether it is a video stream in which 2-dimensional image data has been inserted, or a video stream in which 3-dimensional image data has been inserted. For example, in the case of having been encoded with H.264/AVC (Advanced Video Coding), signaling information is included in the portion of SEIs of the access unit. Also, in the case of having been encoded with the MPEG2video encoding format, signaling information is included at the user data region of the picture header.

However, the timing of switching between a video stream in which 2-dimensional image data has been inserted and a video stream in which 3-dimensional image data has been inserted cannot be foretold until that timing for switching actually comes.

As described above, the viewer can be made to sense stereoscopic images by viewing the left eye image and right eye image with shutter glasses. Even while wearing the shutter glasses, the shutters can be kept open (open) while displaying 2-dimensional image, which will suppress electric power consumption, and may improve health of vision.

In order to automatically switch the mode of the shutter glasses between whether in a 2-dimensional image display state or a 3-dimensional image display state, there is the need to supply the switching information thereof to the shutter glasses before the actual switching timing.

It is an object of the present invention to enable suitable automatic switching of the mode of shutter glasses when receiving a multiplexed stream including, in a time sharing manner, video streams in which 2-dimensional image data has been inserted and video streams in which 3-dimensional image data has been inserted, and performing 2-dimensional image display or 3-dimensional image display. Solution to Problem

A concept of the present invention is a transmitter including:

a transmission unit configured to transmit a multiplexed stream including, in a time sharing manner, a first video stream into which 2-dimensional image data has been inserted and a second video stream into which 3-dimensional image data has been inserted;
an information inserting unit configured to insert, into the multiplexed stream, advance information which notifies in advance switching between the first video stream and the second video stream.

With the present invention, a transmission unit transmits a multiplexed stream including, in a time sharing manner, a first video stream into which 2-dimensional (2D) image data has been inserted and a second video stream into which 3-dimensional (3D) image data has been inserted. An information inserting unit inserts, into the multiplexed stream, advance information which notifies in advance switching between the first video stream and the second video stream. For example, the advance information may have added thereto timing information which indicates an interval from the insertion timing of the advance information until the switching timing. Also, for example, the advance information may have added thereto information indicating whether switching to the first video stream or switching to the second video stream.

For example, the advance information is inserted in a stream which makes up the multiplexed stream and which is independent from the video stream. Also, for example, the advance information is inserted in a layer at or higher than a picture layer of the video stream. Also, for example, the advance information is inserted in a header portion of a PES making up the video stream. Also, for example, the advance information is inserted underneath a program map table included in the multiplexed stream.

Thus, with the present invention, advance information which notifies in advance switching between a first video stream into which 2-dimensional image data has been inserted and a second video stream into which 3-dimensional image data has been inserted, is inserted into a multiplexed stream. Accordingly, at the reception side, automatic switching of modes of the shutter glasses can be suitably performed at the actual switching timing of the 2-dimensional image display state and 3-dimensional image display state, by performing control based on this advance information.

Also, a concept of the present invention is a receiver including:

a reception unit configured to receive a multiplexed stream including, in a time sharing manner, a first video stream into which 2-dimensional image data has been inserted and a second video stream into which 3-dimensional image data has been inserted, and further into which has been inserted advance information notifying in advance switching of the first video stream and the second video stream;

a display control unit configured to perform 2-dimensional image display, or 3-dimensional image display where left eye images and right eye images are alternately displayed, on a display unit, based on image data obtained from the video streams included in the multiplexed stream received by the reception unit; and

a shutter control unit configured to transmit a shutter mode switching command to shutter glasses, before switching timing between the 2-dimensional image display and the 3-dimensional image display, based on the advance information obtained from the multiplexed stream received by the reception unit.

With the present invention, a reception unit receives a multiplexed stream including, in a time sharing manner, a first video stream into which 2-dimensional image data has been inserted and a second video stream into which 3-dimensional image data has been inserted. This multiplexed stream has further inserted therein advance information notifying in advance switching of the first video stream and the second video stream.

A display control unit performs 2-dimensional image display, or 3-dimensional image display where left eye images and right eye images are alternately displayed, on a display unit, based on image data obtained from the video streams included in the multiplexed stream received by the reception unit. That is to say, in the event that the video stream is the first video stream and 2-dimensional image data is included, 2-dimensional image display is performed. On the other hand, in the event that the video stream is the second video stream and 3-dimensional image data is included, 3-dimensional image display is performed.

A shutter control unit then transmits a shutter mode switching command to shutter glasses, before switching timing between the 2-dimensional image display and the 3-dimensional image display, based on the advance information obtained from the multiplexed stream received by the reception unit. For example, the shutter mode switching command may include information indicating time until switching the shutter mode. Also, for example, the shutter mode switching command may have added thereto information indicating whether switching to a shutter mode corresponding to 2-dimensional image display or switching to a shutter mode corresponding to 3-dimensional image display.

Thus, with the present invention, a shutter mode switching command is transmitted to the shutter glasses before the switching timing between 2-dimensional image display and 3-dimensional image display, based on the advance information notifying in advance switching between the first video stream into which 2-dimensional image data has been inserted and the second video stream into which 3-dimensional image data has been inserted, which are included in the received multiplexed stream. Accordingly, automatic switching of modes of the shutter glasses can be suitably performed at the actual switching timing of the 2-dimensional image display state and 3-dimensional image display state.

Also, another concept of the present invention is a receiver including:

a reception unit configured to receive a multiplexed stream including, in a time sharing manner, a first video stream into which 2-dimensional image data has been inserted and a second video stream into which 3-dimensional image data has been inserted, and further into which has been inserted advance information notifying in advance switching of the first video stream and the second video stream; and

a data transmission unit configured to transmit to an external device, by way of a transmission path, image data obtained from the video streams included in the multiplexed stream received by the reception unit, and advance information obtained from the multiplexed stream.

With the present invention, a reception unit receives a multiplexed stream including, in a time sharing manner, a first video stream into which 2-dimensional image data has been inserted and a second video stream into which 3-dimensional image data has been inserted. This multiplexed stream further has inserted therein advance information notifying in advance switching of the first video stream and the second video stream.

A data transmission unit transmits to an external device, by way of a transmission path, image data obtained from the video streams included in the multiplexed stream received by the reception unit, and advance information obtained from the multiplexed stream. For example, the data transmission unit is configured to transmit the image data to the external device by differential signals, by way of the transmission path, in multiple channels, and transmits the advance information to the external device by inserting the advance information in a blanking period of the image data.

Thus, with the present invention, advance information notifying in advance switching of the first video stream into which 2-dimensional image data has been inserted and the second video stream into which 3-dimensional image data has been inserted, which are included in the received multiplexed stream, is transmitted to the external device along with the image data, by way of the transmission path. Accordingly, at the external device, automatic switching of modes of the shutter glasses can be suitably performed at the actual switching timing of the 2-dimensional image display state and 3-dimensional image display state, by performing control based on this advance information.

Also, another concept of the present invention is a receiver including:

a data reception unit configured to receive from an external device, by way of a transmission path, image data including 2-dimensional image data and 3-dimensional image data in a time sharing manner, and inserted advance information notifying in advance switching between 2-dimensional image data and 3-dimensional image data;
a display control unit configured to perform 2-dimensional image display, or 3-dimensional image display where left eye images and right eye images are alternately displayed, on a display unit, based on image data received by the data reception unit; and
a shutter control unit configured to transmit a shutter mode switching command to shutter glasses, before switching timing between the 2-dimensional image display and the 3-dimensional image display, based on the advance information received by the data reception unit.

With the present invention, a data reception unit receives from an external device, by way of a transmission path such as an HDMI cable, image data and advance information. The image data includes 2-dimensional image data and 3-dimensional image data in a time sharing manner. Also, the advance information is information notifying in advance switching of the 2-dimensional image data and the 3-dimensional image data.

A display control unit performs 2-dimensional image display, or 3-dimensional image display where left eye images and right eye images are alternately displayed, on a display unit, based on image data received by the data reception unit. That is to say, in the event that the received image data is 2-dimensional image data, 2-dimensional image display is performed. On the other hand, in the event that the received image data is 3-dimensional image data, 3-dimensional image display is performed.

A shutter control unit then transmits a shutter mode switching command to shutter glasses, before switching timing between the 2-dimensional image display and the 3-dimensional image display, based on the advance information received by the data reception unit. For example, the shutter mode switching command may include information indicating the time until switching of the shutter mode. Also, for example, the shutter mode switching command may have added thereto information indicating whether switching to a shutter mode corresponding to the 2-dimensional image display or switching to a shutter mode corresponding to the 3-dimensional image display.

Thus, with the present invention, advance information notifying in advance switching of 2-dimensional image data and 3-dimensional image data is received along with the image data, and based on this advance information, a shutter mode switching command is transmitted to the shutter glasses before the switching timing between the 2-dimensional image data and 3-dimensional image data. Accordingly, automatic switching of modes of the shutter glasses can be suitably performed at the actual switching timing of the 2-dimensional image display state and 3-dimensional image display state.

Advantageous Effects of Invention

According to the present invention, suitable automatic switching of shutter glasses can be performed when receiving a multiplexed stream including, in a time sharing manner, video streams in which 2-dimensional image data has been inserted and video streams in which 3-dimensional image data has been inserted, and performing 2-dimensional image display or 3-dimensional image display.

Brief Description of Drawings

[Fig. 1] Fig. 1 is a block diagram illustrating a configuration example of an image transmission/reception system as a first embodiment of the present invention.

[Fig. 2] Fig. 2 is a diagram illustrating time management at a transmitting side, and the relation between a video stream and advance information.

[Fig. 3] Fig. 3 is a diagram illustrating the relation between a video stream included in a transport stream received at a receiver, and advance information obtained from this transport stream.

[Fig. 4] Fig. 4 is a block diagram illustrating a configuration example of a transmission data generating unit to generate a transport stream.

[Fig. 5] Fig. 5 is a diagram illustrating image data of a 1920 x 1080 pixel format.

[Fig. 6] Fig. 6 is a diagram for describing a "Top & Bottom" format, a "Side By Side" format, and a "Frame Sequential" format, which are transmission formats of stereoscopic image data (3D image data).

[Fig. 7] Fig. 7 is a diagram illustrating the relation between a video stream, and an advance information stream inserted in an advance information stream independent from this video stream.

[Fig. 8] Fig. 8 is a diagram illustrating a configuration example of a transport stream including a video elementary stream, audio elementary stream, and advance information elementary stream.

[Fig. 9] Fig. 9 is a diagram illustrating a configuration example (Syntax) of "G_data".

[Fig. 10] Fig. 10 is a diagram illustrating primary data stipulated contents (semantics) of "G_data" and later-described "G_descriptor".

[Fig. 11] Fig. 11 is a block diagram illustrating a configuration example of a transmission data generating unit to generate a transport stream.

[Fig. 12] Fig. 12 is a diagram illustrating the relation between a video stream, and advance information inserted in a layer at or higher than the picture layer of this video stream.

[Fig. 13] Fig. 13 is a diagram illustrating a configuration example (Syntax) in a case of inserting G_data in PES_private_data (128 bits fixed length) of a PES layer.

[Fig. 14] Fig. 14 is a diagram illustrating the relation between a video stream, and advance information inserted in PES_private_data of a PES layer.

[Fig. 15] Fig. 15 is a block diagram illustrating a configuration example of a transport stream including a video elementary stream (advance information inserted) and audio elementary stream.

[Fig. 16] Fig. 16 is a block diagram illustrating a configuration example of a transmission data generating unit to generate a transport stream.

[Fig. 17] Fig. 17 is a diagram illustrating the relation between a video stream, and advance information inserted underneath a program map table (PMT) of a transport stream TS.

[Fig. 18] Fig. 18 is a diagram illustrating a configuration example of a transport stream (advance information inserted) including a video elementary stream and audio elementary stream.

[Fig. 19] Fig. 19 is a diagram illustrating a configuration example (Syntax) of "G_descriptor".

[Fig. 20] Fig. 20 is a block diagram illustrating a configuration example of a receiver configuring an image transmission/reception system.

[Fig. 21] Fig. 21 is a diagram illustrating a configuration example of shutter glasses for a user to sense a stereoscopic image.

[Fig. 22] Fig. 22 is a diagram schematically illustrating transmission timing and so forth of shutter mode switching commands from a shutter control unit in the receiver to the shutter glasses.

[Fig. 23] Fig. 23 is a block diagram illustrating a configuration example of an image transmission/reception system as a second embodiment of the present invention.

[Fig. 24] Fig. 24 is a block diagram illustrating a configuration example of a set top box configuring an image transmission/reception system.

[Fig. 25] Fig. 25 is a block diagram illustrating a configuration example of a receiver configuring an image transmission/reception system.

[Fig. 26] Fig. 26 is a diagram schematically illustrating transmission timing and so forth of shutter mode switching commands from a shutter control unit in the receiver to the shutter glasses.

[Fig. 27] Fig. 27 is a block diagram illustrating a configuration example of an HDMI transmission unit (HDMI source) and HDMI reception unit (HDMI sink).

[Fig. 28] Fig. 28 is a diagram illustrating a configuration example of TMDS transmission data (case of image data transmitted with horizontal x vertical being 1920 pixels x 1080 lines).

[Fig. 29] Fig. 29 is a diagram illustrating a packet configuration example of HDMI Vendor Specific InfoFrame, in a case of using HDMI Vendor Specific InfoFrame for transmission of advance information (G_data). Description of Embodiments

A mode for implementing the present invention (hereafter, referred to as "embodiment") will now be described. Note that description will be made in the following sequence.

    1. First Embodiment
    2. Second Embodiment
    3. Modifications

<1. First Embodiment>

[Image Transmission/Reception System]

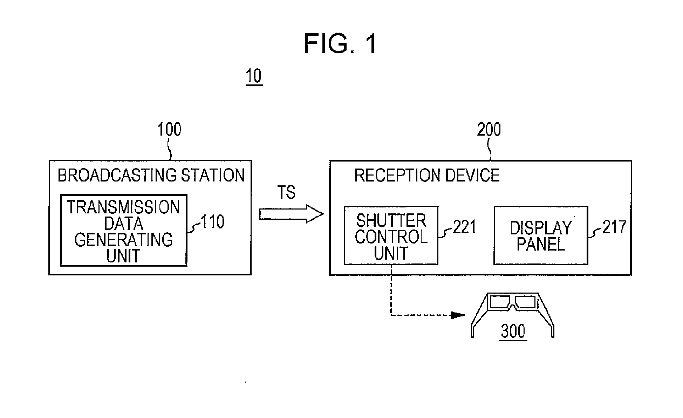

Fig. 1 illustrates a configuration example of a image transmission/reception system 10 as a first embodiment. This image transmission/reception system 10 is configured of a broadcasting station 100 and a receiver 200. The broadcasting station 100 transmits, over broadcast waves, a transport stream TS as a multiplexed stream including a first video stream (first video elementary stream) and a second video stream (second video elementary stream) in a time sharing manner.

The broadcasting station 100 has a transmission data generating unit 110 which generates this transport stream TS. 2-dimensional (2D) image data is inserted in the first video stream. Also, 3-dimensional (3D) image data is inserted in the second video stream. Now, the video streams are, for example, H.264/AVC video streams or MEPG2 video streams.

Inserted in the transport stream TS is advance information indicating in advance switching between the first video stream and the second video stream. Timing information indicating the interval from the insertion timing of this advance information until the switching timing is added to this advance information. Also, information indicating whether switching to the first video stream or switching to the second video stream is included in this advance information.

For example, the advance information is inserted into a stream independent from the video streams making up the transport stream. Also, for example, the advance information is inserted in a layer at or higher than the picture layer of a video stream. Also, for example, the advance information is inserted in a PES header portion making up a video stream. Also, for example, the advance information is inserted beneath a program map table (PMT: Program Map Table) included in the multiplexed stream.

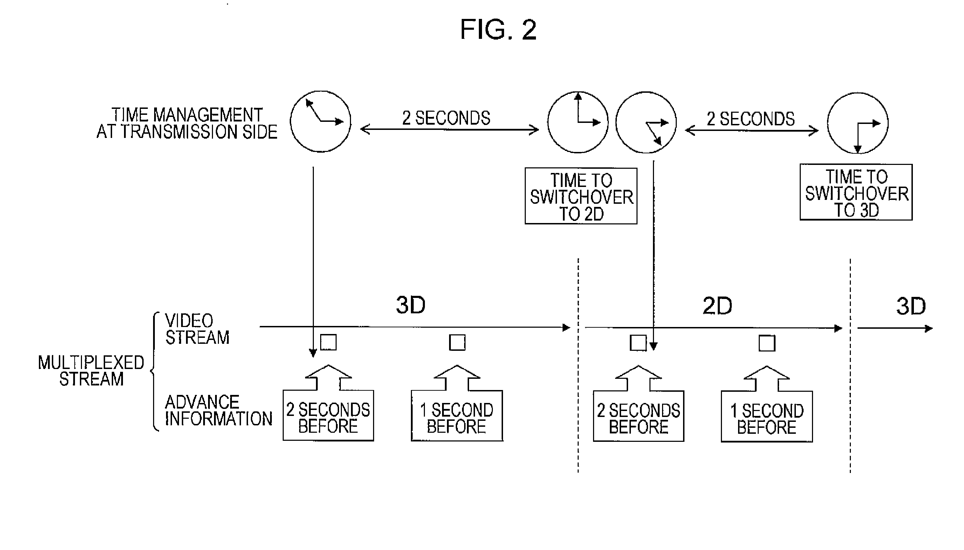

Fig. 2 illustrates time management at the transmission side, and the relation between video streams and advance information. Advance information is inserted at a predetermined amount of time before, such as at a timing of two seconds before, one second before, or the like, as to the switching timing from the second video stream including 3-dimensional image data, to the first video stream including 2-dimensional image data. Also, advance information is inserted at a predetermined amount of time before, such as at a timing of two seconds before, one second before, or the like, as to the switching timing from the first video stream including 2-dimensional image data, to the second video stream including 3-dimensional image data.

The receiver 200 receives the transport stream TS transmitted from the broadcasting station 100 over broadcast waves. The receiver 200 obtains the image data from the video streams included in the received transport stream TS. The receiver 200 has a display panel (display unit) 217. The receiver 200 performs 2-dimensional image display, or 3-dimensional image display where the left eye image and right eye image are alternately displayed, on the display panel 217. That is to say, in the event that the video stream is the first video stream and includes 2-dimensional image data, 2-dimensional image display is performed. On the other hand, in the event that the video stream is the second video stream and includes 3-dimensional image data, 3-dimensional image display is performed.

Also, the receiver 200 obtains advance information from the received transport stream TS. The receiver 200 has a shutter control unit 221 which controls the operations of shutter glasses 300. Based on the advance information, the receiver 200 transmits shutter mode switching commands to the shutter glasses 300 before the switching timing between 2-dimensional image display and 3-dimensional image display, using the shutter control unit 221.

A shutter mode switching command has added thereto information indicating the amount of time until switching the shutter mode, and information indicating whether switching to a shutter mode corresponding to 2-dimensional image display or switching to a shutter mode corresponding to 3-dimensional image display. The shutter glasses 300 suitably switch the shutter mode at the actual switching timing for the 2-dimensional image display state and the 3-dimensional image display state, based on this shutter mode switching command.

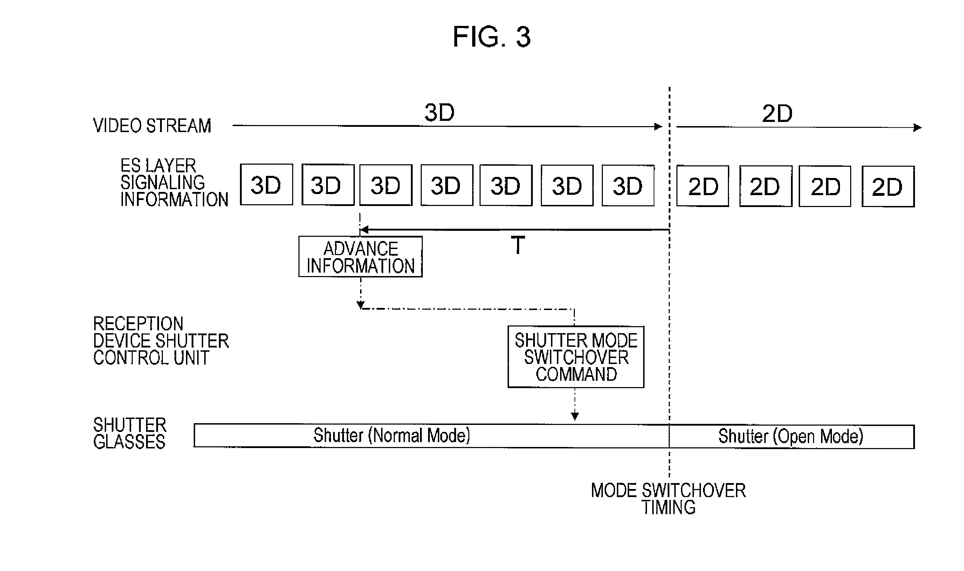

Fig. 3 illustrates the relation between a transport stream TS received at the receiver 200, i.e., video streams included in bit stream data, and advance information obtained from this transport stream TS. Also, this Fig. 3 schematically illustrates the transmission timing of a shutter mode switching command from the shutter control unit 221 of the receiver 200 to the shutter glasses 300.

The advance information obtained from the transport stream TS is inserted with leeway of time T as to the switching timing from the second video stream to the first video stream at the transmission side. Based on this advance information, the shutter mode switching command is transmitted from the shutter control unit 221 of the receiver 200 to the shutter glasses 300, at a timing earlier than the shutter mode switching timing. Based on this shutter mode switching command, at the shutter glasses 300 the shutter mode is switched in accordance with the switching timing from the 3-dimensional image display to the 2-dimensional image display.

[Configuration Example of Transmission Data Generating Unit]

[First Configuration Example]

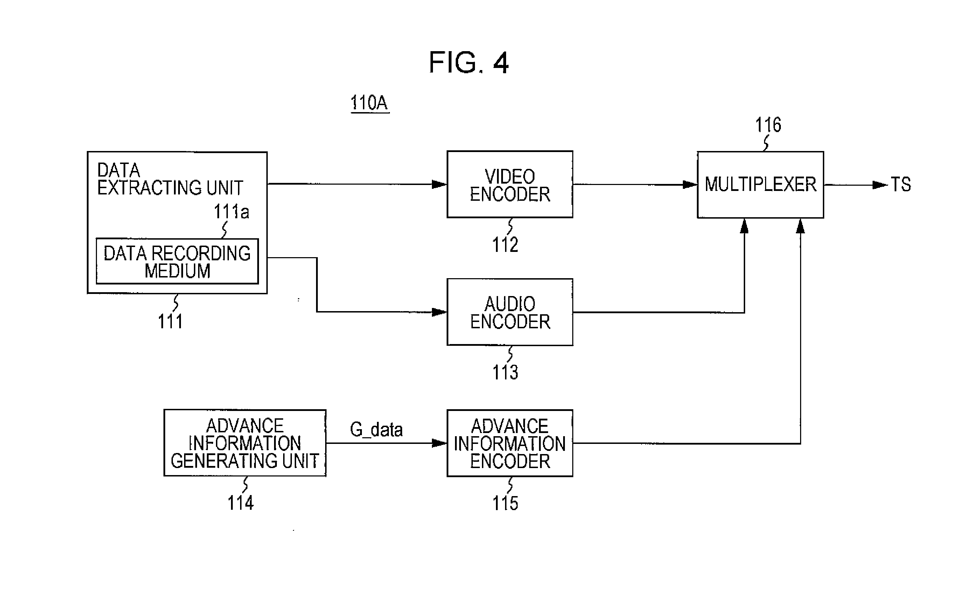

A transmission data generating unit 110A shown in Fig. 4 illustrates an example of a transmission data generating unit 110 for generating the above-described transport stream TS at the broadcasting station 100. This transmission data generating unit 110A illustrates an example where the advance information is inserted in a independent stream from the video streams, making up the transport stream TS. This transmission data generating unit 110A has a data extracting unit (archive unit) 111, a video encoder 112 and an audio encoder 113. The transmission data generating unit 110A also has an advance information generating unit 114, an advance information encoder 115, and a multiplexer 116.

The data extracting unit 111 extracts and outputs image data and audio data from a data recording medium 111a. The data recording medium 111a is a disc-shaped recording medium, semiconductor memory, or the like, detachably mounted to the data extracting unit 111, for example. Recorded in the data recording medium 111a so, along with image data of a predetermined program transmitted with a transport stream TS, audio data corresponding to this image data. For example, the image data switches to 3-dimensional (3D) image data or 2-dimensional (2D) image data, in accordance with the program. Also, for example, the image data switches to 3-dimensional (3D) image data or 2-dimensional (2D) image data, in accordance with the contents of a main feature, commercials, and so forth, even during a program.

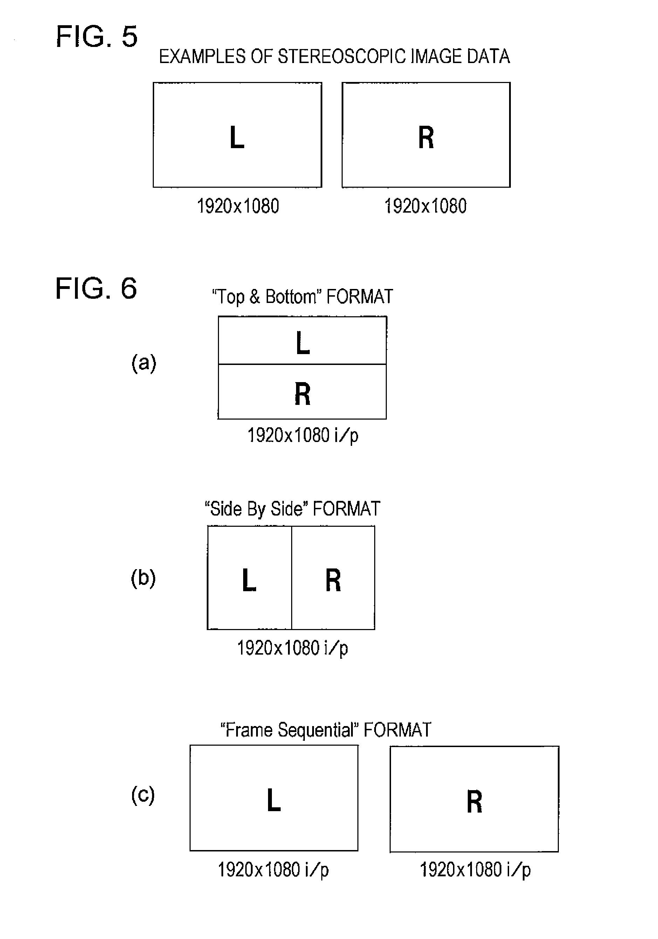

The 3-dimensional image data is configured of left eye image data and right eye image data. An example of the transmission format of 3-dimensional image data will be described here. While the following first through third formats are given as transmission formats, transmission formats other than these may be used. Here, as illustrated in Fig. 5, description will be made regarding a case where each piece of image data of the left eye (L) and the right eye (R) is image data with determined resolution, e.g., a pixel format of 1920 x 1080, as an example.

The first transmission format is a top & bottom (Top & Bottom) format, and is, as illustrated in Fig. 6(a), a format for transmitting the data of each line of left eye image data in the first half of the vertical direction, and transmitting the data of each line of left eye image data in the second half of the vertical direction. In this case, the lines of the left eye image data and right eye image data are thinned out to 1/2, so the vertical resolution is reduced to half as to the original signal.

The second transmission format is a side by side (Side By Side) format, and is, as illustrated in Fig. 6 (b), a format for transmitting pixel data of the left eye image data in the first half of the horizontal direction, and transmitting pixel data of the right eye image data in the second half of the horizontal direction. In this case, the left eye image data and right eye image data each have the pixel data thereof in the horizontal direction thinned out to 1/2, so the horizontal resolution is reduced to half as to the original signal.

The third transmission format is a frame sequential (Frame Sequential) format, and is, as illustrated in Fig. 6(c), a format for transmitting left eye image data and right eye image data by sequentially switching these for each frame. Note that this frame sequential format is also sometimes called full frame (Full Frame) format or backward compatible (BackwardCompatible) format.

The video encoder 112 encodes the image data output from the data extracting unit 111 to H.264/AVC or MPEG2 encoding and obtains encoded video data. Also, in the event that the image data is 2-dimensional image data, the video encoder 112 generates a video elementary stream (first video stream) with this 2-dimensional image data inserted therein, by a stream formatter (not shown) had downstream. Also, in the event that the image data is 3-dimensional image data, the video encoder 112 generates a video elementary stream (second video stream) with this 3-dimensional image data inserted therein.

The audio encoder 113 encodes the audio data output from the data extracting unit 111 to encoding such as MPEG-2Audio AAC or the like, and generates an audio elementary stream.

The advance information generating unit 114 generates G_data as advance information to inform in advance of switching between the first video stream into which the 2-dimensional image data has been inserted and the second video stream into which the 3-dimensional image data has been inserted. This G-data includes timing information indicating the interval from the insertion timing of advance information to the switching timing, information indicating whether switching to the first video stream or switching to the second video stream, and so forth. The advance information generating unit 114 generates a predetermined number of G_data to be used at a predetermined number of insertion timings of the advance information, in accordance with each switching timing between the first video stream and the second video stream.

The advance information encoder 115 subjects the predetermined number of G_data output from the advance information generating unit 114 to predetermined encoding, and generates an advance information elementary stream. In this case, a PTS (Presentation Time Stamp) is appended to each G_data, for synchronizing between video streams.

The multiplexer 116 packetizes and multiplexes the elementary streams generated at the video encoder 112, audio encoder 113, and advance information encoder 115, and generates a transport stream TS as a multiplexed stream.

During a predetermined program period where 2-dimensional image data is output from the data extracting unit 111, or a predetermined period within a program, this transport stream TS includes the first video stream into which this 2-dimensional image data has been inserted. Also, during a predetermined program period where 3-dimensional image data is output from the data extracting unit 111, or a predetermined period within a program, this transport stream TS includes the second video stream into which this 3-dimensional image data has been inserted.

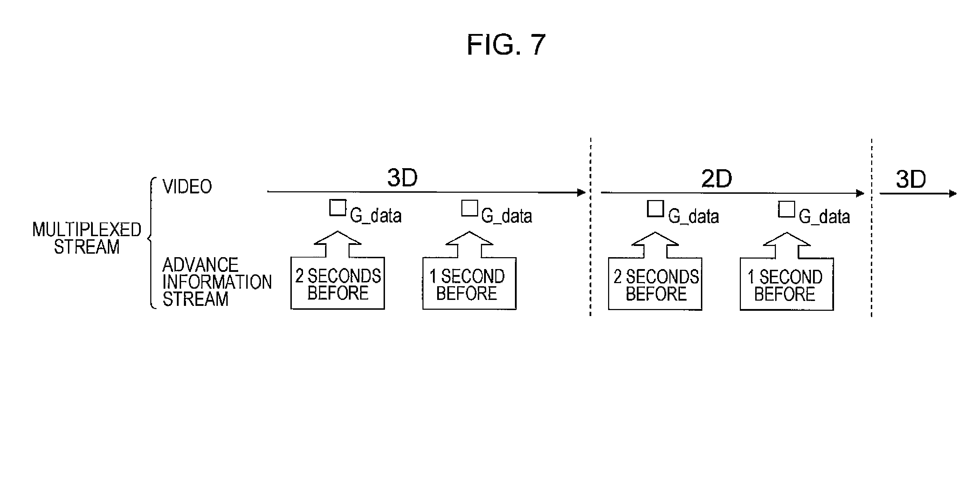

Further, this transport stream TS includes an advance information stream which is independent from the video streams (first video stream and second video stream). Fig. 7 illustrates the correlation between video streams and the advance information stream. The advance information stream has inserted therein advance information (G_data) a predetermined time before, e.g., at timings such as two seconds before, one second before, for example, the switching timing between the first video stream and second video stream.

Operations of the transmission data generating unit 110A shown in Fig. 4 will be described in brief. Image data (3-dimensional image data or 2-dimensional image data) output from the data extracting unit 111 is supplied to the video encoder 112. At the video encoder 112, the image data is subjected to encoding by H.264/AVC or MPEG2, thereby generating a video elementary stream (video stream) including encoded video data.

In this case, in the event that the image data is 2-dimensional image data, a video elementary stream into which this 2-dimensional image data has been inserted (first video stream) is generated. Also, in the event that the image data is 3-dimensional image data, a video elementary stream into which this 3-dimensional image data has been inserted (second video stream) is generated. The video elementary streams generated at the video encoder 112 in this way are supplied to the multiplexer 116.

Also, when image data is output from the data extracting unit 111, audio data corresponding to that image data is also output from the data extracting unit 111. This audio data is supplied to the audio encoder 113. At the audio encoder 113, the audio data is subjected to encoding such as MPEG-2Audio AAC or the like, and an audio elementary stream including the encoded audio data is generated. This audio elementary stream is supplied to the multiplexer 116.

Also, at the advance information generating unit 114, a predetermined number of G_data (advance information) used at a predetermined number of insertion timings of advance information are generated, in accordance with each switching timing between the first video stream and second video stream. This G_data includes timing information indicating the interval from the insertion timing of advance information to the switching timing, information indicating whether switching to the first video stream or switching to the second video stream, and so forth.

The G_data generated at the advance information generating unit 114 is supplied to the advance information encoder 115. At the advance information encoder 115, the G_data is subjected to predetermined encoding, and an advance information elementary stream is generated. In this case, a PTS for synchronizing with the video streams is appended to each G_data. This advance information elementary stream is supplied to the multiplexer 116.

At the multiplexer 116, the elementary streams supplied from the encoders are packetized and multiplexed, thereby generating a transport stream TS. During a predetermined program period where 2-dimensional image data is output from the data extracting unit 111, or a predetermined period within a program, this transport stream TS includes the first video stream into which this 2-dimensional image data has been inserted. Also, during a predetermined program period where 3-dimensional image data is output from the data extracting unit 111, or a predetermined period within a program, this transport stream TS includes the second video stream into which this 3-dimensional image data has been inserted. Further, in this transport stream TS, further, this transport stream TS includes an advance information stream independent from the video streams.

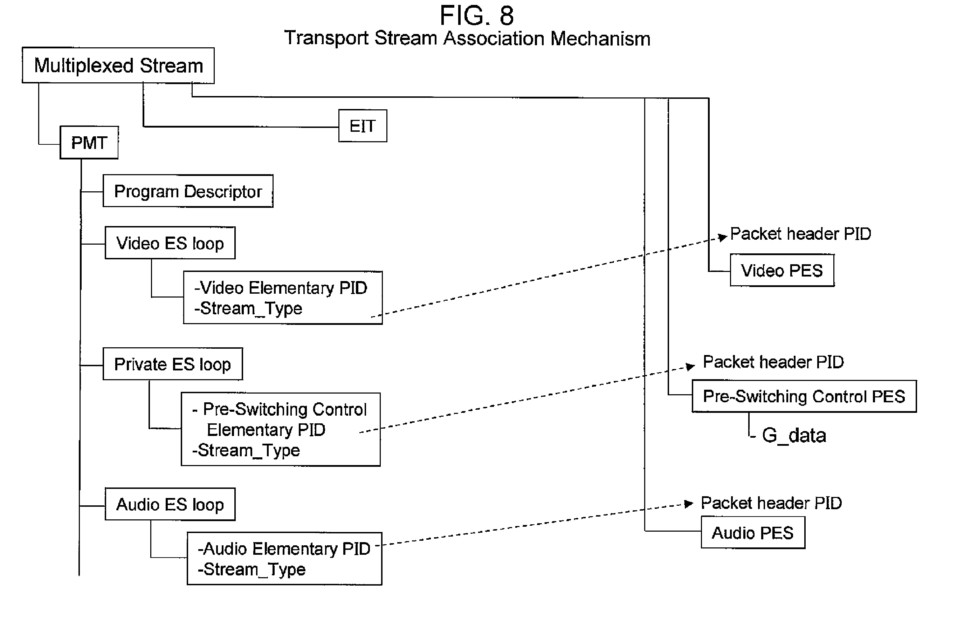

Fig. 8 illustrates a configuration example of a transport stream (multiplexed data stream) including a video elementary stream, an audio elementary stream, and an advance information elementary stream. This transport stream includes PES packets obtained by packetizing the elementary streams. With this configuration example, PES packets "Video PES" of the video elementary stream are included. Also, with this configuration example, PES packets "Audio PES" of the audio elementary stream and PES packets "Pre-SwtichingControl PES" of the advance information elementary stream are included. G_data serving as advance information is inserted in the advance information elementary stream, as described above.

Also, the transport stream includes a PMT (ProgramMap Table) as PSI (Program Specific Information). This PSI is information describing to which program each elementary stream included in the transport stream belongs. Also, the transport stream includes an EIT (EventInformation Table) as SI (Serviced Information) performing management in increments of events.

A program descriptor (Program Descriptor) in which is described information relating to the entire program exists in the PMT. Also, an elementary loop having information relating to each elementary stream exists in this PMT. With this configuration example, there exist a video elementary loop, audio elementary loop, and private elementary loop. Each elementary loop has information such as packet identifiers (PID), stream type (Stream_Type) and so forth situated therein for each stream, and also has situated therein descriptors describing information relating to the elementary streams, though not illustrated in the drawings.

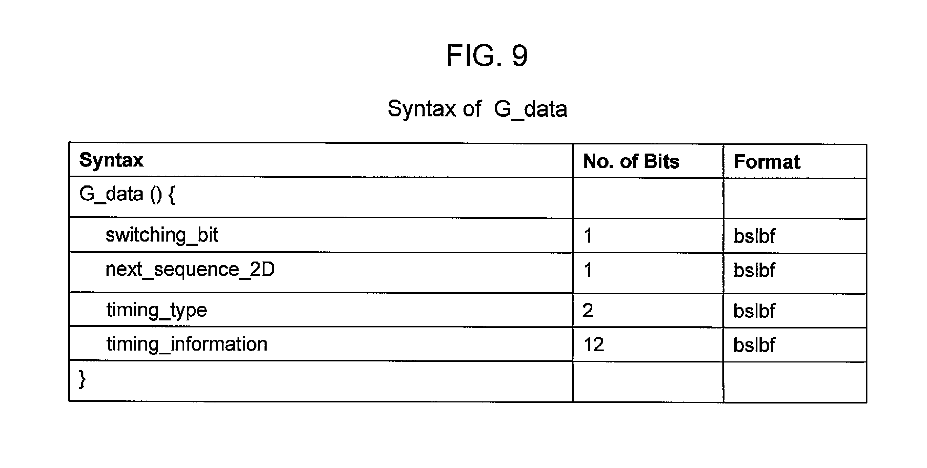

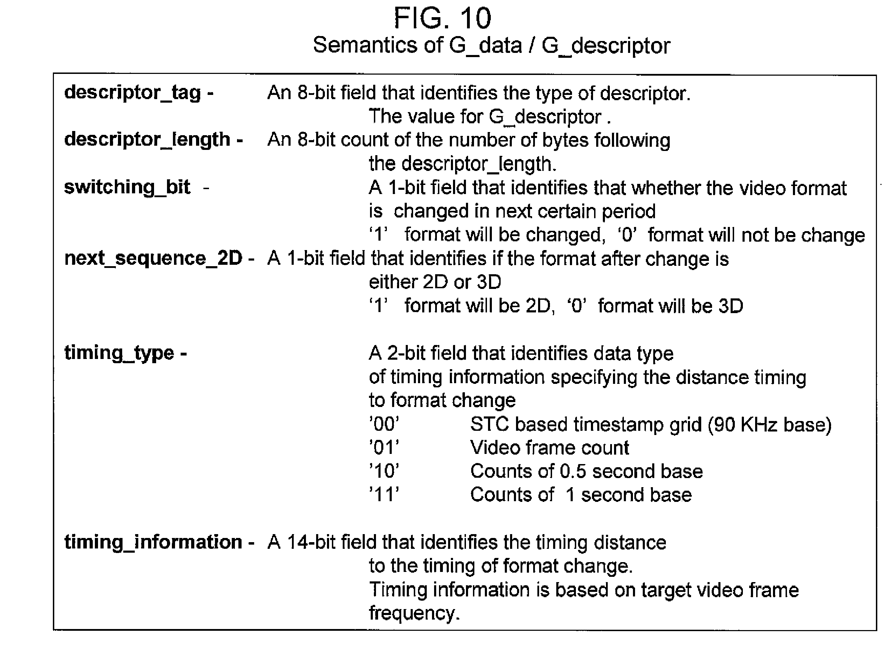

Fig. 9 illustrates a configuration example (Syntax) of "G_data". Fig. 10 illustrates primary data stipulation contents (semantics) of "G_data" and later-described "G_descriptor". The 1-bit field of "switching_bit" indicates whether or not there is switching from a first video stream to a second video stream, or switching from a second video stream to a first video stream, in the next video stream period. "1" indicates that there is switching, and "0" indicates that there is no switching.

The 1-bit field of "next_sequence_2D" indicates whether the video stream after switching is a first video stream into which 2-dimensional image data has been inserted, or is a second video stream into which 3-dimensional image data has been inserted. "1" indicates a first video stream, and "0" indicates a second video stream. In the event that the above-described 1-bit field of "switching_bit" is "0", reading of this 1-bit field of "next_sequence_2D" is skipped.

The 14-bit field of "timing_information" indicates timing information which is the interval from the insertion timing of the advance information to the switching timing. This timing information is based on the object video frame frequency. The 2-bit field of "timing_type" indicates the data type of the above-described "timing_information". "00" indicates that the timing information is STC (System Time Clock) based on a time stamp grid (90-kHz-based). "01" indicates that the timing information is video frame count. "10" indicates that the timing information is 0.5-second-based counts. "11" indicates that the timing information is 1-second-based counts.

[Second Configuration Example]

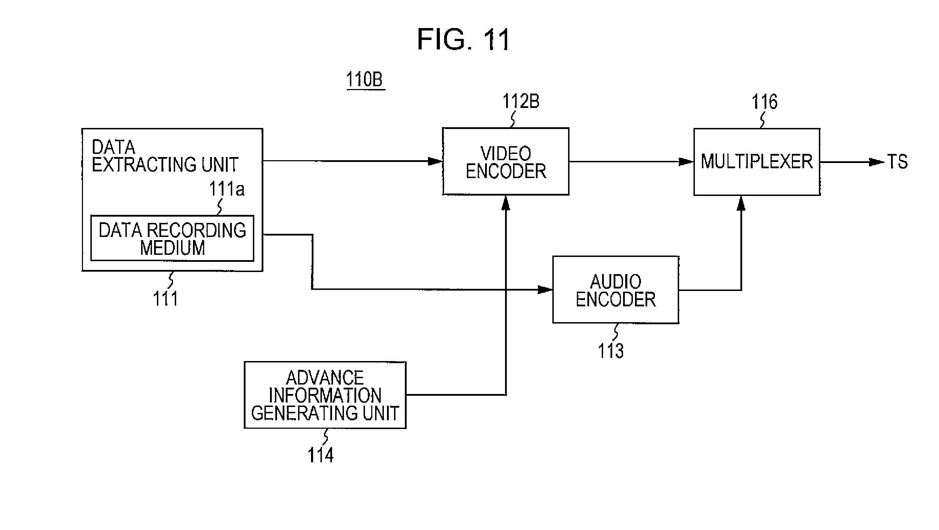

A transmission data generating unit 110B shown in Fig. 11 illustrates an example of the transmission data generating unit 110 which generates the above-described transport stream TS in the broadcasting station 100. This transmission data generating unit 110B illustrates an example wherein the advance information is inserted in a layer at the picture layer of the video stream or higher. In this Fig. 11, portions corresponding to those in Fig. 4 are denoted with the same reference symbols, and detailed description thereof will be omitted as appropriate.

This transmission data generating unit 110B has the data extracting unit (archive unit) 111, a video encoder 112B, the audio encoder 113, the advance information generating unit 114, and the multiplexer 116. The video encoder 112B subjects the image data output from the data extracting unit 111 to encoding of H. 264/AVC or MPEG2, thereby obtaining encoded video data.

Also, by way of a downstream stream formatter (not shown), in the event that the image data is 2-dimensional image data, this video encoder 112B generates a video elementary stream into which this 2-dimensional image data has been inserted (first video stream). Also, in the event that the image data is 3-dimensional image data, this generates a video elementary stream into which this 3-dimensional image data has been inserted (second video stream). At this time, the video encoder 112 inserts the G_data serving as advance information generated at the advance information generating unit 114 to a layer at the picture layer of the video stream or higher. In this case, the video encoder 112B inserts a predetermined number of G_data used at a predetermined number of insertion timings of advance information, each at video stream positions corresponding to those insertion timings.

For example, in the event that H.264/AVC (Advanced Video Coding) encoding has been performed, the video encoder 112B inserts G_data into the SEIs portion of the access unit. Also, for example, in the event that MPEG2 video coding format encoding has been performed, G_data is inserted by the video encoder 112B to the user data region of the picture header. Note that in cases of inserting G_data to the header portion of the PES (Packetized Elementary Stream) of the video stream, insertion of the G_data is performed at the multiplexer 116. That is to say, insertion of G_data into the PES_private_data (128-bit fixed length) of the PES layer at the multiplexer 116 is performed.

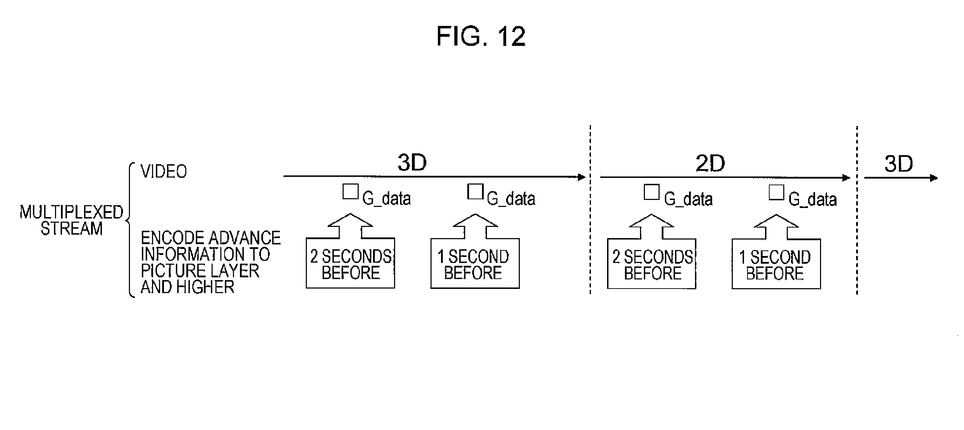

Fig. 12 illustrates the relation between the video streams and advance information inserted to a layer at the picture layer of this video stream or higher. The advance information (G_data) is inserted to the layer at the picture layer of the video stream or higher, at a predetermined time before, e.g., at timings such as two seconds before, one second before, for example, the switching timing between the first video stream and second video stream.

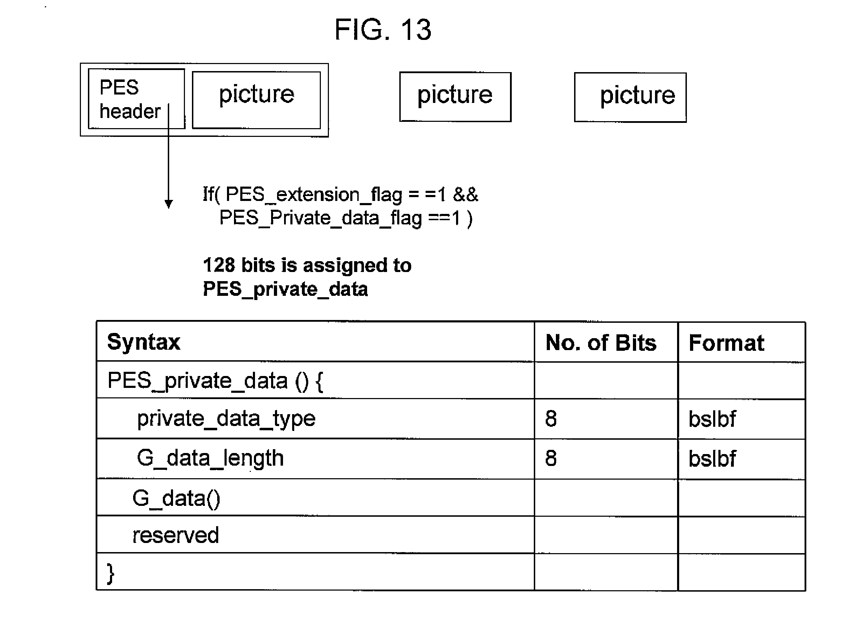

Fig. 13 illustrates a structure example (Syntax) of PES_private_data in a case of inserting the G_data to the PES_private_data (128-bit fixed length) of the PES layer. An identifying value indicating G_data is defined in the 8-bit field of "private_data_type". The size of the G_data following this is indicated in the 8-bit field of "G_data_length".

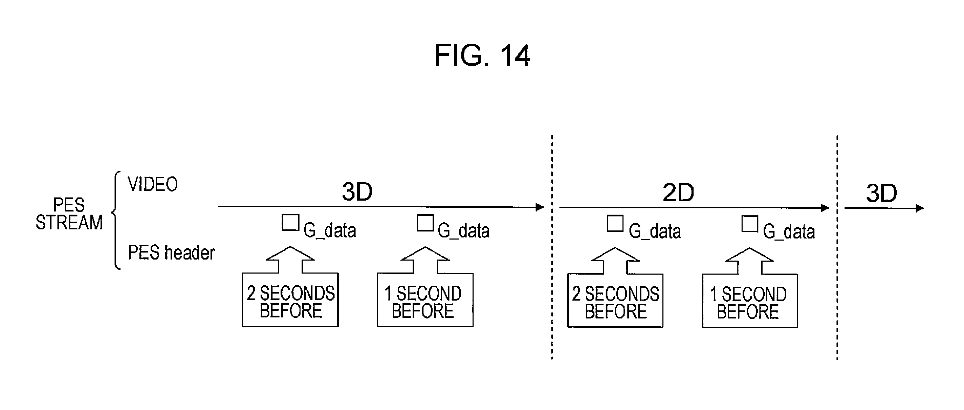

Fig. 14 illustrates the relation between video streams and advance information inserted into PES_private_data of the PES layer. The advance information (G_data) is inserted to PES_private_data at a predetermined time before, e.g., at timings such as two seconds before, one second before, for example, the switching timing between the first video stream and second video stream.

The multiplexer 116 packetizes and multiplexes the elementary streams generated at the video encoder 112B and the audio encoder 113, and generates a transport stream TS as a multiplexed stream. While detailed description will be omitted, the transmission data generating unit 110B shown in this Fig. 11 is otherwise configured in the same way as with the transmission data generating unit 110A shown in Fig. 4.

Operations of the transmission data generating unit 110B shown in Fig. 11 will be described in brief. Image data (3-dimensional image data or 2-dimensional image data) output from the data extracting unit 111 is supplied to the video encoder 112B. At this video encoder 112B, the image data is subjected to encoding by H. 264/AVC or MPEG2, thereby generating a video elementary stream (video stream) including encoded video data.

In this case, in the event that the image data is 2-dimensional image data, a video elementary stream into which this 2-dimensional image data has been inserted (first video stream) is generated. Also, in the event that the image data is 3-dimensional image data, a video elementary stream into which this 3-dimensional image data has been inserted (second video stream) is generated. The video elementary streams generated at the video encoder 112B in this way are supplied to the multiplexer 116.

Also, when image data is output from the data extracting unit 111, audio data corresponding to that image data is also output from the data extracting unit 111. This audio data is supplied to the audio encoder 113. At the audio encoder 113, the audio data is subjected to encoding such as MPEG-2Audio AAC or the like, and an audio elementary stream including the encoded audio data is generated. This audio elementary stream is supplied to the multiplexer 116.

Also, at the advance information generating unit 114, a predetermined number of G_data (advance information) used at a predetermined number of insertion timings of advance information are generated, in accordance with each switching timing between the first video stream and second video stream. This G_data includes timing information indicating the interval from the insertion timing of advance information to the switching timing, information indicating whether switching to the first video stream or switching to the second video stream, and so forth.

The G_data generated at this advance information generating unit 114 is supplied to the video encoder 112B. At the video encoder 112B, the G_data is inserted to a layer at the picture layer of the video stream or higher. In this case, the video encoder 112B inserts a predetermined number of G_data used at a predetermined number of insertion timings of advance information, each at video stream positions corresponding to those insertion timings. Thus, in this case, synchronization is realized with the video streams for each G_data. Note that as described above, in cases of inserting G_data to the header portion of the PES (Packetized Elementary Stream) of the video stream, the G_data generated at the advance information generating unit 114 is supplied to the multiplexer 116, and insertion of the G_data is performed at this multiplexer 116.

At the multiplexer 116, the elementary streams supplied from the encoders are packetized and multiplexed, thereby generating a transport stream TS. During a predetermined program period where 2-dimensional image data is output from the data extracting unit 111, or a predetermined period within a program, this transport stream TS includes the first video stream into which this 2-dimensional image data has been inserted. G_data serving as advance information is inserted to a layer at the picture layer of this video stream or higher.

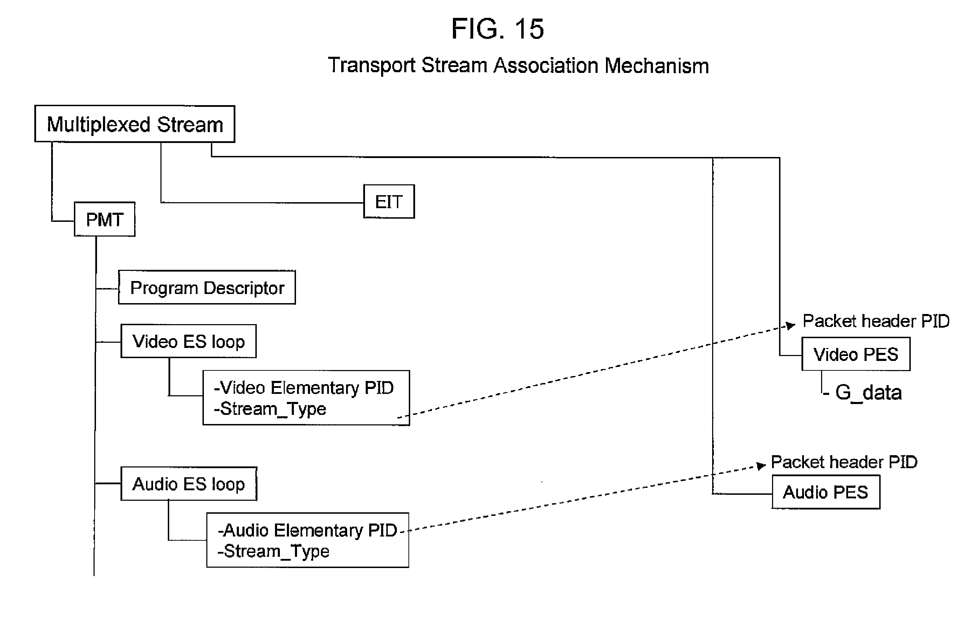

Fig. 15 illustrates a configuration example of a transport stream (multiplexed data stream) including a video elementary stream and an audio elementary stream. Detailed description of portions of this Fig. 15 corresponding to Fig. 8 will be omitted as suitable. This transport stream includes PES packets obtained by packetizing the elementary streams. With this configuration example, PES packets "Video PES" of the video elementary stream are included. Also, with this configuration example, PES packets "Audio PES" of the audio elementary stream are included. G_data serving as advance information is inserted in the video elementary stream, as described above.

[Third Configuration Example]

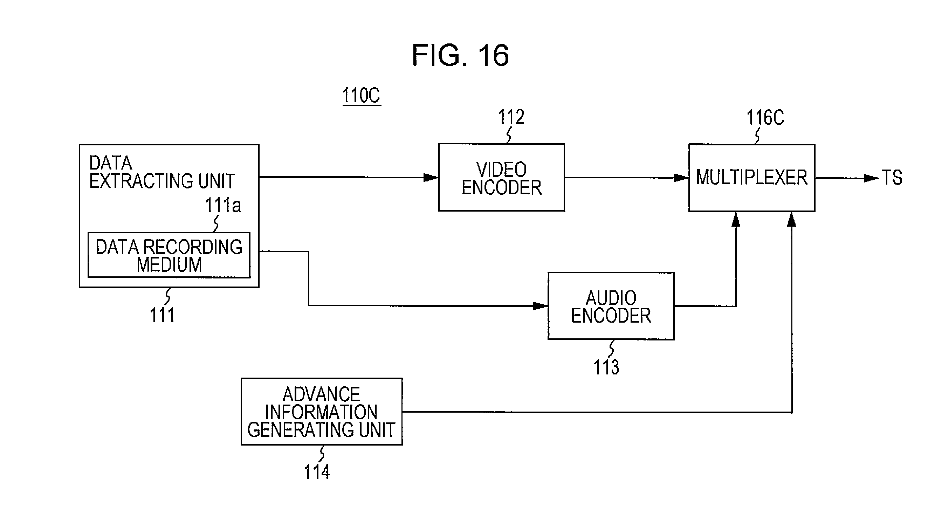

A transmission data generating unit 110C shown in Fig. 16 illustrates an example of the transmission data generating unit 110 which generates the above-described transport stream TS in the broadcasting station 100. This transmission data generating unit 110C illustrates an example wherein the advance information is inserted underneath a program map table included in the multiplexed stream. In this Fig. 16 portions corresponding to those in Fig. 4 are denoted with the same reference symbols, and detailed description thereof will be omitted as appropriate.

The transmission data generating unit 110C has the data extracting unit (archive unit) 111, the video encoder 112, the audio encoder 113, the advance information generating unit 114, and a multiplexer 116C. The multiplexer 116C packetizes and multiplexes the elementary streams generated at the video encoder 112 and the audio encoder 113, and generates a transport stream TS as a multiplexed stream.

Now, the multiplexer 116C generates a G_descriptor as a descriptor including the advance information (G_data) generated at the advance information generating unit 114, and inserts this descriptor underneath the program map table (PMT). In this case, the multiplexer 116C inserts a predetermined number of G_descriptor used at a predetermined number of insertion timings of advance information, each corresponding to those insertion timings.

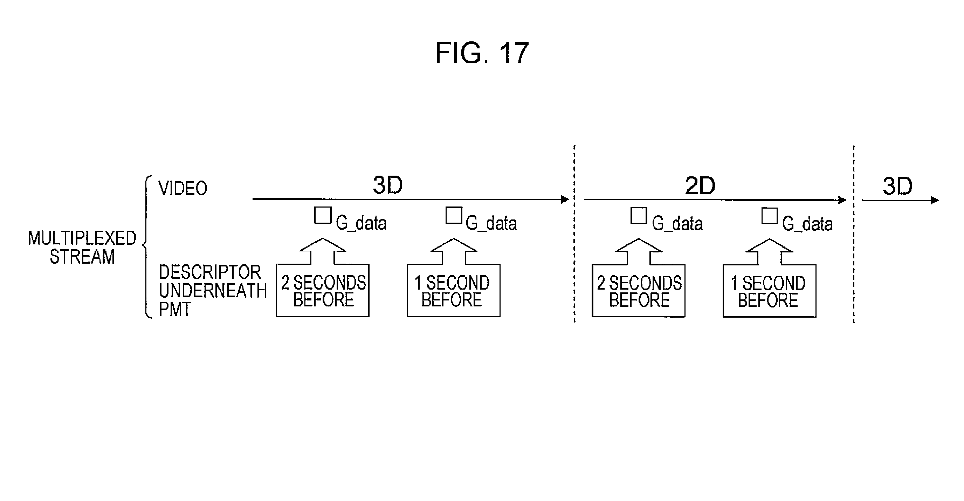

Fig. 17 illustrates the relation between the video streams and advance information inserted underneath the program map table (PMT) of the transport stream TS. A descriptor including the advance information (G_data) is inserted underneath the program map table (PMT), at a predetermined time before, e.g., at timings such as two seconds before, one second before, for example, the switching timing between the first video stream and second video stream.

While detailed description will be omitted, the transmission data generating unit 110C shown in this Fig. 16 is otherwise configured in the same way as with the transmission data generating unit 110A shown in Fig. 4.

Operations of the transmission data generating unit 110C shown in Fig. 16 will be described in brief. Image data (3-dimensional image data or 2-dimensional image data) output from the data extracting unit 111 is supplied to the video encoder 112. At this video encoder 112, the image data is subjected to encoding by H. 264/AVC or MPEG2, thereby generating a video elementary stream (video stream) including encoded video data.

In this case, in the event that the image data is 2-dimensional image data, a video elementary stream into which this 2-dimensional image data has been inserted (first video stream) is generated. Also, in the event that the image data is 3-dimensional image data, a video elementary stream into which this 3-dimensional image data has been inserted (second video stream) is generated. The video elementary streams generated at the video encoder 112 in this way are supplied to the multiplexer 116C.

Also, when image data is output from the data extracting unit 111, audio data corresponding to that image data is also output from this data extracting unit 111. This audio data is supplied to the audio encoder 113. At this audio encoder 113, the audio data is subjected to encoding such as MPEG-2Audio AAC or the like, and an audio elementary stream including the encoded audio data is generated. This audio elementary stream is supplied to the multiplexer 116C. The multiplexer 116C packetizes and multiplexes the elementary streams generated at the video encoder 112 and the audio encoder 113, and generates a transport stream TS as a multiplexed stream.

Also, at the advance information generating unit 114, a predetermined number of G_data (advance information) used at a predetermined number of insertion timings of advance information are generated, in accordance with each switching timing between the first video stream and second video stream. This G_data includes timing information indicating the interval from the insertion timing of advance information to the switching timing, information indicating whether switching to the first video stream or switching to the second video stream, and so forth.

The G_data generated at this advance information generating unit 114 is supplied to the multiplexer 116C. At the multiplexer 116C, the descriptor (G_descriptor) including the contents of the G_data, serving as advance information generated at the advance information generating unit 114, is created, and this descriptor is inserted underneath the program map table (PMT). In this case, the multiplexer 116C inserts a predetermined number of G_descriptor used at a predetermined number of insertion timings of advance information, each corresponding to those insertion timings. Thus, in this case, synchronization is realized with the video streams for each G_descriptor.

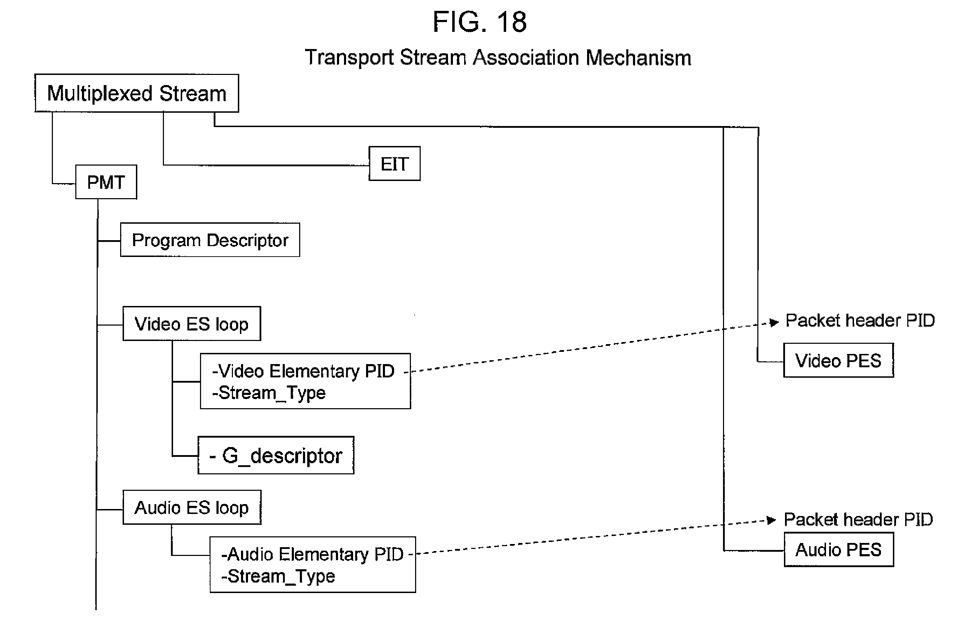

Fig. 18 illustrates a configuration example of a transport stream (multiplexed data stream) including a video elementary stream and an audio elementary stream. Detailed description of portions of this Fig. 18 corresponding to Fig. 8 will be omitted as suitable. This transport stream includes PES packets obtained by packetizing the elementary streams. With this configuration example, PES packets "Video PES" of the video elementary stream are included. Also, with this configuration example, PES packets "Audio PES" of the audio elementary stream are included.

Also, the transport stream TS includes a PMT (ProgramMap Table) as PSI (Program Specific Information). This PSI is information describing to which program each elementary stream included in the transport stream belongs. Also, the transport stream TS includes an EIT (EventInformation Table) as SI (Serviced Information) performing management in increments of events. In this configuration example, "G_descriptor" including the contents of the advance information (G_data) is inserted underneath the PMT, e.g., the video elementary loop (Video ES loop), as described above.

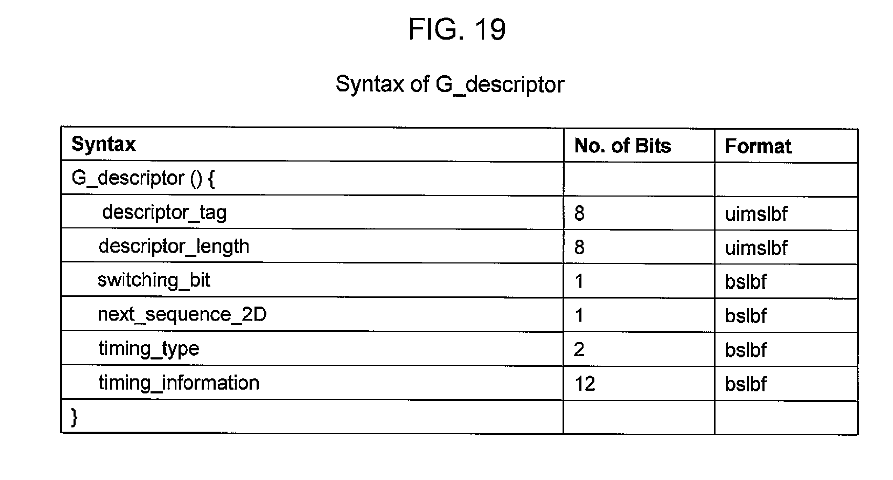

Fig. 19 illustrates a configuration example (Syntax) of "G_descriptor". The 8-bit field of "descriptor_tag" indicates that this descriptor is "G_descriptor". The 8-bit field of "descriptor_length" illustrates the subsequent number of data bytes. Note that the fields of "switching_bit", "next_sequence_2D", "next_sequence_2D", and "timing_information" are the same as with those described in the structure example of "G_data" described above, so description thereof will be omitted (see Fig. 9, Fig. 10).

As described above, with the transmission data generating unit 110 (110A, 110B, 110C) illustrated in Fig. 4, Fig. 11, and Fig. 16, advance information indicating in advance switching between a first video stream into which 2-dimensional image data has been inserted and a second video stream into which 3-dimensional image data has been inserted, is inserted into a transport stream TS serving as a multiplexed stream. Accordingly, at the reception side, automatic switching of the mode of shutter glasses can be appropriately performed in accordance with the actual timing of switching between the 2-dimensional image display state and 3-dimensional image display state, by controlling based on this advance information.

[Configuration Example of Receiver]

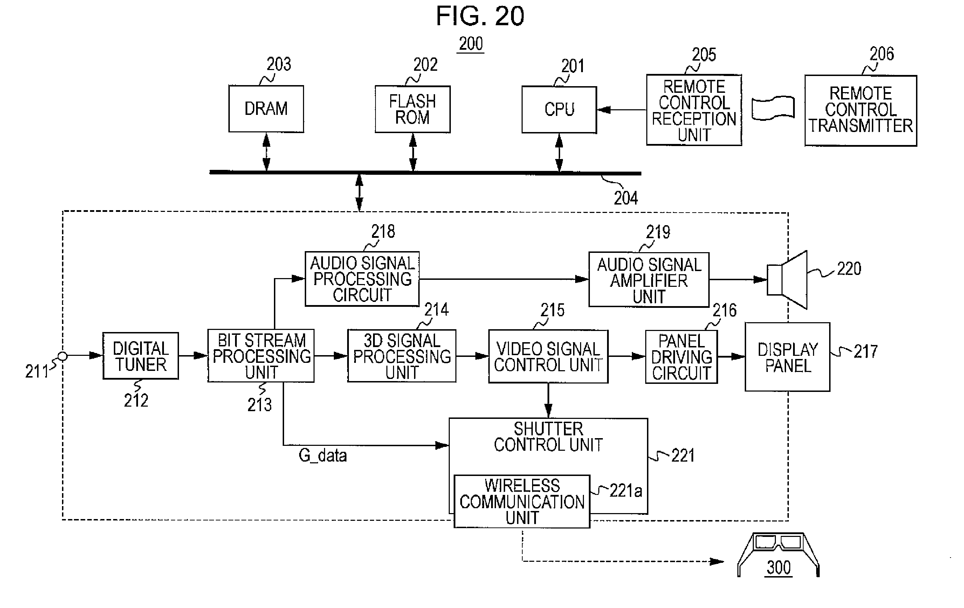

Fig. 20 illustrates a configuration example of a receiver 200. This receiver 200 includes a CPU 201, flash ROM 202, DRAM 203, an internal bus 204, a remote control reception unit 205, and a remote control transmitter 206. Also, the receiver 200 includes an antenna terminal 211, a digital tuner 212, a bit stream processing unit 213, a 3D signal processing unit 214, and a video signal control unit 215. Also, the receiver 200 includes a panel driving circuit 216, a display panel 217, an audio signal processing unit 218, an audio amplifier unit 219, a speaker 220, and a shutter control unit 221.

The CPU 201 controls the operation of each unit of the receiver 200. The flash ROM 202 performs storing of control software and storing of data. The DRAM 203 makes up the work area of the CPU 201. The CPU 201 loads the software and data read out from the flash ROM 202 to the DRAM 203, starts up the software, and controls each unit of the image display device 100.

The remote control unit 205 receives the remote control signal (remote control code) transmitted from the remote control transmitter 206, and supplies to the CPU 201. The CPU 201 controls each unit of the receiver 200 based on this remote control code. The CPU 201, flash ROM 202, and DRAM 203 are connected to each other by way of the internal bus 204.

The antenna terminal 211 is a terminal for inputting a television broadcasting signal received at a reception antenna (not illustrated). The digital tuner 212 processes the television broadcasting signal input to the antenna terminal 211, and outputs a predetermined transport stream TS (bit stream data) corresponding to the user's selected channel. The bit stream processing unit 213 extracts image data and audio data serving as content data, and further advance information (G_data), and so forth, from the bit stream data.

When the output image data from the bit stream processing unit 213 is 3-dimensional image data, the 3D signal processing unit 214 performs processing corresponding to the transmission format, and generates and outputs left eye image data and right eye image data for each frame. Note that in the event that the output image data of the 3D signal processing unit 214 is 2-dimensional image data, the 3D signal processing unit 214 outputs the 2-dimensional image data as it is.

When left eye image data and right eye image data for each frame is output from the 3D signal processing unit 214, the video signal control unit 215 generates image data for 3-dimensional image display. That is to say, the video signal control unit 215 generates image data for displaying on the display panel 217 in the order of left eye image → right eye image → left eye image → right eye image → ... in a time sharing manner. Also, when 2-dimensional image data is output from the 3D signal processing unit 214, the video signal control unit 215 generates image data for 2-dimensional image display.

The video signal control unit 215 outputs the generated image data to the panel driving unit 216. The panel driving unit 216 drives the display panel 217 based on the image data from the video signal control unit 215, and performs 3-dimensional image display or 2-dimensional image display on the display panel 217. That is to say, with 3-dimensional image display, left eye images and right eye images are displayed on the display panel 217 in a time sharing manner. Also, with 2-dimensional image display, 2-dimensional images are consecutively displayed on the display panel 217.

The audio signal processing unit 218 subjects the audio data received at the bit stream processing unit 213 to necessary processing such as D/A conversion or the like. The audio signal amplifier unit 219 amplifies the audio signal output from the audio signal processing unit 218, and supplies to the speaker 220.

The shutter control unit 221 generates shutter control signals to control shutter operations of the shutter glasses 300, based on the advance information obtained at the bit stream processing unit 213, predetermined signals generated based on signal processing at the video signal control unit 215, and so forth. A wireless communication unit 221a which the shutter control unit 221 has performs wireless communication with the shutter glasses 300 based on, for example, IEEE 802.15.4. This wireless communication unit 221a transmits shutter control signals generated at the shutter control unit 221 to the shutter glasses 300.

Shutter control signals include, for example, shutter opening/closing cycle and L/R phase information thereof, information of shutter release time, and so forth. The shutter control unit 221 generates shutter mode switching commands, as one of shutter control signals. This shutter mode switching command is a command signal to switch the shutter mode of the shutter glasses 300 to normal mode (Normal Mode) or open mode (Open Mode). When in the normal mode, the shutter glasses 300 have a left eye shutter and right eye shutter each in an open state corresponding to the display of the left eye image and right eye image at the display panel 217. Also, when in the open mode, the shutter glasses 300 have both the left eye shutter and right eye shutter in an open state.

The shutter mode switching command has added thereto information indicating the time till switching the shutter mode, and further information indicating whether switching to the open mode or switching to the normal mode. Based on the advance information, the shutter control unit 221 generates this shutter mode switching command, and transmits to the shutter glasses 300 before the switching timing between 2-dimensional image display and 3-dimensional image display. An example of transmission timing of the shutter mode switching command from the shutter control unit 221 to the shutter glasses 300 will be described later.

[Configuration of Shutter Glasses]

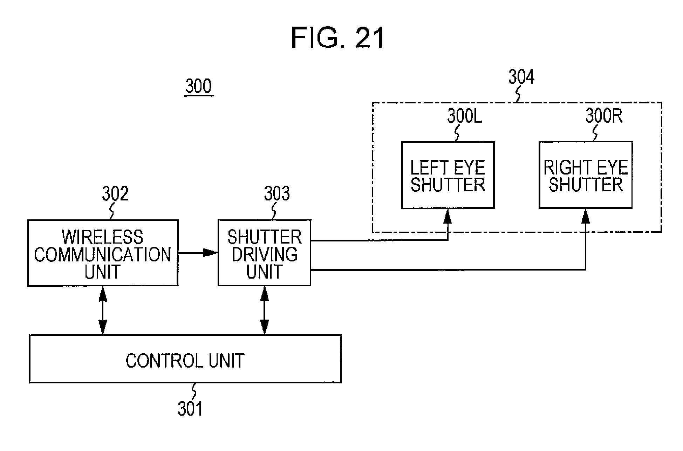

Description will be made regarding the shutter glasses 300. Fig. 21 illustrates a configuration example of the shutter glasses 300. These shutter glasses 300 have a control unit 301, a wireless communication unit 302, a shutter driving unit 303, and a glasses unit 304.

The control unit 301 controls the operations of each part of the shutter glasses 300. The wireless communication unit 302 performs wireless communication with the receiver 200 based on, for example, IEEE 802.15.4. This wireless communication unit 302 receives shutter control signals transmitted from the wireless communication unit 221a in the shutter control unit 221 of the receiver 200.

The shutter driving unit 303 drives a left eye shutter 300L and right eye shutter 300R of the glasses unit 304 under control of the control unit 301, based on shutter control signals received at the wireless communication unit 302. As described above, a shutter mode switching command exists as one of shutter control signals. This shutter mode switching command has added thereto information indicating the amount of time until switching the shutter mode, and further, information indicating whether switching to open mode or switching to normal mode.

Based on this shutter mode switching command, the shutter driving unit 303 switches shutter driving shutter mode from normal mode to open mode, or from open mode to normal mode. When in the normal mode, the shutter driving unit 303 opens the left eye shutter 300L at the timing that the left eye image is displayed on the display panel 217 of the receiver 200, and opens the right eye shutter 300R at the timing that the right eye image is displayed on the display panel 217 of the receiver 200.

Also, when in the normal mode, the shutter driving unit 303 leaves open both the left eye shutter 300L and the right eye shutter 300R in accordance with the 2-dimensional image display on the display panel 217 of the receiver 200. Accordingly, this suppresses electric power consumption, and also contributes to improved health of vision.

Operations of the receiver 200 shown in Fig. 20 and the shutter glasses 300 shown in Fig. 21 will be described. Television broadcasting signals input to the antenna terminal 211 are supplied to the digital tuner 212. With this digital tuner 212, the television broadcasting signals are processed, and bit stream data serving as a predetermined transport stream TS corresponding to the user's selected channel is obtained.

The bit stream data output from the digital tuner 212 is supplied to the bit stream processing unit 213. With this bit stream processing unit 213, image data, audio data, and further advance information (G_data) and the like are extracted from the bit stream data. The image data extracted at this bit stream processing unit 213 is supplied to the 3D signal processing unit 214.

At the 3D signal processing unit 214, in the event that the output image data from the bit stream processing unit 213 is 3-dimensional image data, processing corresponding to the transmission format is performed, and left eye image data and right eye image data for each frame is generated and output. Also, in the event that the output image data of the bit stream processing unit 213 is 2-dimensional image data, the 3D signal processing unit 214 outputs the 2-dimensional image data as it is. The image data output from this 3D signal processing unit 214 is supplied to the video signal control unit 215.

When left eye image data and right eye image data for each frame is output from the 3D signal processing unit 214, the video signal control unit 215 generates image data for 3-dimensional image display. That is to say, the video signal control unit 215 generates image data for displaying on the display panel 217 in the order of left eye image → right eye image → left eye image → right eye image → ... in a time sharing manner. Also, when 2-dimensional image data is output from the 3D signal processing unit 214, the video signal control unit 215 generates image data for 2-dimensional image display.

The image data generated at the video signal control unit 215 is supplied to the panel driving unit 216. The panel driving unit 216 drives the display panel 217 based on the image data from the video signal control unit 215, and performs 3-dimensional image display or 2-dimensional image display on this display panel 217.

That is to say, with 3-dimensional image display, left eye images and right eye images are displayed on the display panel 217 in a time sharing manner. Also, with 2-dimensional image display, 2-dimensional images are consecutively displayed on the display panel 217.

Also, audio data extracted at the bit stream processing unit 213 is supplied to the audio signal processing unit 218. This audio signal processing unit 218 subjects the audio data to necessary processing such as D/A conversion or the like. This audio data is amplified at the audio signal amplifier unit 219, and then supplied to the speaker 220. Accordingly, audio corresponding to the displayed image on the display panel 217 is output from the speaker 220.

Also, predetermined signals generated based on signal processing are supplied from the video signal control unit 215 to the shutter control unit 221. Also, the advance information extracted at the bit stream processing unit 213 is supplied to the shutter control unit 221. The shutter control unit 221 generates shutter control signals such as shutter mode switching commands o control shutter operations of the shutter glasses 300, based on the advance information and so forth.

The shutter control signals are transmitted to the shutter glasses 300 via the wireless communication unit 221a. In this case, the shutter control signals are transmitted in an intermittent manner, from the perspective of suppressing power consumption at the shutter glasses 300 and so forth. Also, in this case, the shutter mode switching commands are transmitted to the shutter glasses 300 before the switching timing between the 2-dimensional image display and 3-dimensional image display.

With the wireless communication unit 302 of the shutter glasses 300, the shutter control signals transmitted from the wireless communication unit 221a in the shutter control unit 221 of the receiver 200 are received. Then at the shutter driving unit 303, the left eye shutter 300L and right eye shutter 300R of the glasses unit 304 are driven under control of the control unit 301, based on the shutter control signals received at the wireless communication unit 302.

In this case, at a switching timing to the 3-dimensional image display state where left eye images and right eye images are sequentially displayed on the display panel 217 of the receiver 200, the shutter mode of the glasses unit 304 is switched to the normal mode. On the other hand, at a switching timing to the 2-dimensional image display state where 2-dimensional images are displayed on the display panel 217 of the receiver 200, the shutter mode of the glasses unit 304 is switched to the open mode.

In the normal mode, at the timing at which a left eye image is displayed on the display panel 217 of the receiver 200, the left eye shutter 300L is opened, and at the timing at which a right eye image is displayed on the display panel 217 of the receiver 200, the right eye shutter 300R is opened. Accordingly, a user wearing the shutter glasses 300 can only sense the left eye image with the left eye, and can only sense the right eye image with the right eye, and thus can sense a 3-dimensional (3D) image stereoscopic image based on the left eye image and right eye image displayed on the display panel 217.

On the other hand, in the open mode, both the left eye shutter 300L and right eye shutter 300R remain open. Accordingly, the user wearing the shutter glasses 300 can observe the 2-dimensional image displayed on the display panel 217 of the receiver 200 in a natural manner.

As described above, shutter mode switching commands are transmitted from the shutter control unit 221 of the receiver 200 to the shutter glasses 300 before the switching timing between 2-dimensional image display and 3-dimensional image display. Accordingly, at the shutter glasses 300, switching between the normal mode and open mode is performed appropriately at the switching timing between 2-dimensional image display and 3-dimensional image display.

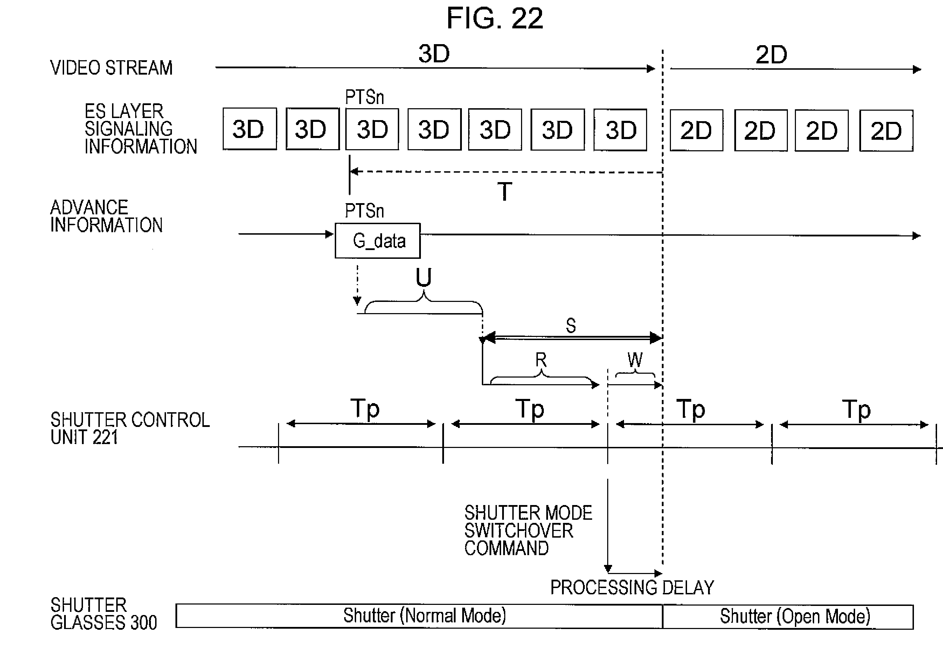

Fig. 22 illustrates the relation between video streams included in the transport stream TS received at the receiver 200, i.e., the video stream included in the bit stream data, and the advance information extracted from the bit stream data at the bit stream processing unit 213. Also, Fig. 22 schematically illustrates transmission timing of shutter mode switching commands from the shutter control unit 221 at the receiver 200 to the shutter glasses 300. This Fig. 22 illustrates an example where the G_data serving as advance information is inserted in an advance information stream, which makes up the transport stream TS and is independent from the video streams (see Fig. 7 and Fig. 8).

The shutter control unit 221 of the receiver 200 immediately measures and records its own clock at a timing A at which G_data is received. In the event that PTS is attached to the G_data, the time leeway T between the point-in-time of the G_data and the shutter mode switching point-in-time is obtained from the value of "timing_information" described in the PTS and the G_data. Note that in the event that G_data exists within the video stream, the time leeway T between the point-in-time of the G_data and the shutter mode switching point-in-time is obtained from the temporal position of the G_data and the value of "timing_information" described in the G_data.

Subsequently, the shutter control unit 221 of the receiver 200 measures elapsed time U from the above-described timing A, and obtains a value S where U has been subtracted from the time leeway T, as in the following Expression (1). Further, a value T3 where R is subtracted from S.

$$S = T - U \ldots (1)$$

$$T3 = S - R \quad \ldots (2)$$

R represents the time of a transmission cycle Tp of a shutter control signal from the shutter control unit 221 of the receiver 200 to the shutter glasses 300 traversing the period S. In a shutter mode switching command (shutter control signal) sent in a temporal grid of a transmission cycle Tp, T3 (S - R) is the same as time W from the time of reception of that command up to the shutter mode switching occurring. That is to say, the shutter mode switching command which is transmitted from the shutter control unit 221 of the receiver 200 in the temporal grid of the transmission cycle Tp has added thereto the information of T3 (S - R), which is information indicating the time up to switching the shutter mode.

At the shutter glasses 300, parameters added to the shutter mode switching commands sent from the shutter control unit 221 of the receiver 200 are detected. That is to say, at the shutter glasses 300, information indicating time till switching the shutter mode (time information till switching), and information indicating whether switching to normal mode or switching to open mode (post-switching mode information) are detected.

At the shutter glasses 300, then, the shutter mode switching timing is controlled based on the time information up to switching. Also, at the shutter glasses 300, the post-switching shutter mode is controlled based on the post-switching mode information. Accordingly, at the shutter glasses 300, switching between the normal mode and open mode is suitably performed at the switching timing between 3-dimensional image display and 2-dimensional image display.

As described above, with the receiver 200 shown in Fig. 20, advance information (G_data) inserted in the received transport stream TS is extracted. This advance information is information notifying in advance switching between the first video stream in which 2-dimensional image data has been inserted and the second video stream in which 3-dimensional image data has been inserted. At the receiver 200, a shutter mode switching command can be transmitted to the shutter glasses 300 before the switching timing between the 2-dimensional image display and 3-dimensional image display, based on this advance information. Accordingly, automatic switching of the mode of the shutter glasses can be appropriately performed in accordance with the actual timing of switching between the 2-dimensional image display state and 3-dimensional image display state, by controlling based on this advance information.

<2. Second Embodiment>

[Image Transmission/Reception System]

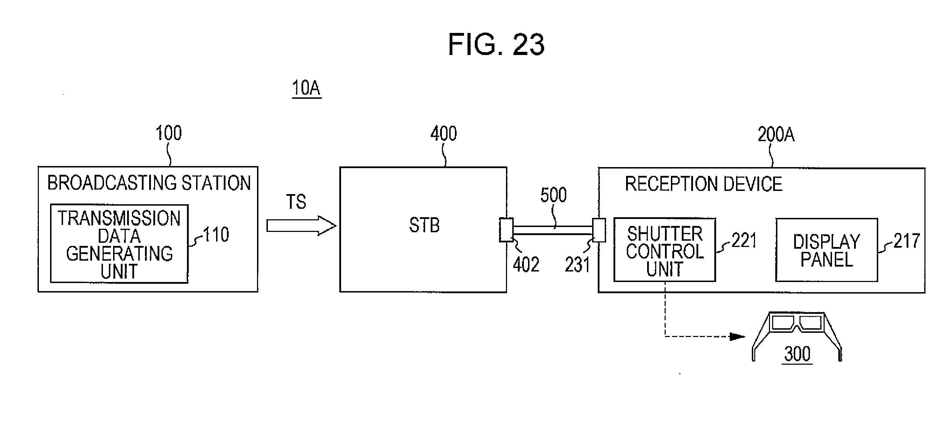

Fig. 23 illustrates a configuration example of an image transmission/reception system 10A as a second embodiment. This image transmission/reception system 10A includes a broadcasting station 100, a set top box (STB: Set Top Box) 400, and a receiver 200A. In Fig. 23, the portions corresponding to Fig. 1 are denoted with the same referential numerals, and detailed description thereof will be omitted as appropriate.

The set top box 400 and the receiver 200A are connected via an HDMI (High Definition Multimedia Interface) cable 500. With the set top box 400, an HDMI terminal 402 is provided. With the receiver 200A, an HDMI terminal 231 is provided. One end of the HDMI cable 500 is connected to the HDMI terminal 402 of the set top box 400, and the other end of this HDMI cable 500 is connected to the HDMI terminal 231 of the receiver 200A.

The broadcasting station 100 transmits a transport stream TS serving as a multiplexed stream including a first video stream (first video elementary stream) and a second video stream (second video elementary stream) in a time sharing manner. The broadcasting station 100 has a transmission data generating unit 110 which generates this transport stream TS. The first video stream has 2-dimensional (2D) image data inserted therein. Also, the second video stream has 3-dimensional (3D) image data inserted therein. Now, a video stream is, for example, an H.264/AVC video stream or MPEG2 video stream.

The transport stream TS has inserted therein advance information notifying in advance switching between the first video stream and the second video stream. This advance information has added thereto timing information indicating the interval from the insertion timing of the advance information till the switching timing. Also, information indicating whether switching to the first video stream or switching to the second video stream is added to this advance information.

For example, the advance information is inserted into a stream independent from the video streams making up the transport stream. Also, for example, the advance information is inserted in a layer at or higher than the picture layer of a video stream. In this case, for example, the advance information is inserted in a PES header portion making up a video stream. Also, for example, the advance information is inserted beneath a program map table (PMT: Program Map Table) included in the multiplexed stream.

The set top box 400 receives the transport stream TS transmitted from the broadcasting station 100 over broadcast waves. The set top box 400 obtains the image data from the video streams included in the received transport stream TS. In the event that the video stream is the first video stream and includes 2-dimensional image data, this image data is 2-dimensional image data, and in the event that the video stream is the second video stream and includes 3-dimensional image data, this image data is 3-dimensional image data.

Also, the set top box 400 obtains advance information (G_data) from the received transport stream TS. The set top box 400 then transmits the image data and advance information to the receiver 200A via an HDMI digital interface, i.e., the HDMI cable 500 serving as a transmission path.

[Configuration Example of Set Top Box]

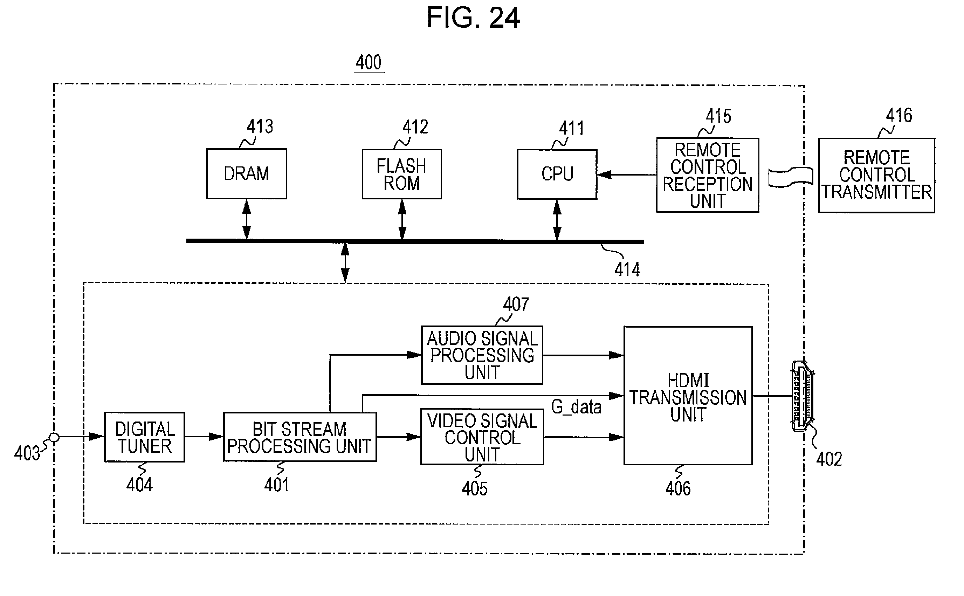

Fig. 24 illustrates a configuration example of the set top box 400. This set top box 400 includes a bit stream processing unit 401, an HDMI terminal 402, an antenna terminal 403, a digital tuner 404, a video signal processing circuit 405, an HDMI transmission unit 406, and an audio signal processing circuit 407. Also, this set top box 400 includes a CPU 411, flash ROM 412, DRAM 413, an internal bus 414, a remote control reception unit 415, and a remote control transmitter 416.

The antenna terminal 403 is a terminal for inputting television broadcasting signal received at a reception antenna (not illustrated). The digital tuner 404 processes the television broadcasting signal input to the antenna terminal 403, and outputs a predetermined transport stream (bit stream data) TS corresponding to the user's selected channel.

The bit stream processing unit 201 is configured the same as with the bit stream processing unit 213 in the receiver 200 shown in Fig. 20 described above, and extracts image data and audio data serving as content data, and further advance information (G_data), and so forth, from the transport stream TS. In the event that the video stream included in the transport stream TS is the first video stream and includes 2-dimensional image data, 2-dimensional image data is extracted as the image data. On the other hand, in the event that the video stream included in the transport stream TS is the second video stream and includes 3-dimensional image data, 3-dimensional image data is extracted as the image data.

The video signal processing circuit 405 subjects the image data (2-dimensional image data, 3-dimensional image data) output from the bit stream processing unit 401 to image quality adjustment processing and so forth according to need, such as scaling processing, image quality processing, and so forth, and supplies the image data after processing thereof to the HDMI transmission unit 406. The audio signal processing circuit 407 subjects the audio data output from the bit stream processing unit 401 to audio quality adjustment processing and so forth according to need, and supplies the audio data after processing thereof to the HDMI transmission unit 406.

The HDMI transmission unit 406 transmits, by communication conforming to HDMI, the image data and audio data, from the HDMI terminal 402. At this time, the HDMI transmission unit 406 adds the advance information (G_data) obtained by the bit stream processing unit 401 as described above to the image data and transmits. Since the data is transmitted by an HDMI TMDS channel, the image and audio data are subjected to packing, and are output from the HDMI transmission unit 406 to the HDMI terminal 402. This HDMI transmission unit 406 is of the version HDMI 1.4 for example, and is in a state capable of handling 3-dimensional image data. Details of this HDMI transmission unit 406 will be described later.

The CPU 411 controls the operation of each unit of the set top box 400. The flash ROM 412 performs storage of control software, and storage of data. The DRAM 413 configures the work area of the CPU 411. The CPU 411 loads the software and data read out from the flash ROM 412 to the DRAM 413, and starts up the software to control each unit of the set top box 400.

The remote control reception unit 415 receives a remote control signal (remote control code) transmitted from the remote control transmitter 416, and supplies to the CPU 411. The CPU 411 controls each unit of the set top box 400 based on this remote control code. The CPU 411, flash ROM 412, and DRAM 413 are connected to the internal bus 414.

The operation of the set top box 400 will be described in brief. The television broadcasting signal input to the antenna terminal 403 is supplied to the digital tuner 404. With this digital tuner 404, the television broadcasting signal is processed, and predetermined transport stream (bit stream data) TS corresponding to the user's selected channel is output.

The transport stream TS output from the digital tuner 404 is supplied to the bit stream processing unit 401. With this bit stream processing unit 401, the image data (2-dimensional image data, 3-dimensional image data), audio data, advance information (G_data), and so forth, are extracted from the transport stream TS.

The image data extracted at the bit stream processing unit 401 is subjected to scaling processing, image quality processing, and so forth, according to need, at the video signal processing circuit 405, and thereafter is supplied to the HDMI transmission unit 406. Also, the audio data extracted at the bit stream processing unit 401 is supplied to the HDMI transmission unit 406 after audio quality adjustment processing has been performed at the audio signal processing circuit 407. Also, the advance information (G_data) extracted at the bit stream processing unit 401 is supplied to the HDMI transmission unit 406. The image data and audio data, and further advance information (G_data) supplied to the HDMI transmission unit 406, are then transmitted from the HDMI terminal 402 to the HDMI cable 500 by an HDMI TMDS channel.

The receiver 200A receives the image data and audio data, and further advance information (G_data), sent from the set top box 400 via the HDMI cable 500. The receiver 200A has the display panel 217. The receiver 200A performs 2-dimensional image, or 3-dimensional image display where the left eye image and right eye image are alternately displayed, on the display panel 217, based on the image data (2-dimensional image data, 3-dimensional image data). That is to say, in the event that 2-dimensional image data is sent from the set top box 400, 2-dimensional image display is performed. On the other hand, in the event that 3-dimensional image data is sent from the set top box 400 is 3-dimensional image data, 3-dimensional image display is performed.

Also, the receiver 200A has the shutter control unit 221. The receiver 200A transmits the shutter mode switching command to the shutter glasses 300 before the switching timing between the 2-dimensional image display and 3-dimensional image display, by the shutter control unit 221, based on the advance information (G_data). This shutter mode switching command has added thereto information indicating the time until switching of the shutter mode, and information indicating whether switching to a shutter mode corresponding to 2-dimensional image display or switching to a shutter mode corresponding to 3-dimensional image display.

The shutter glasses 300 suitably switch the shutter mode at the actual switching timing of switching between the 2-dimensional image display state and 3-dimensional image display state, based on this shutter mode switching command. The configuration of the shutter glasses 300 is the same as described above (see Fig. 21).

[Configuration Example of Receiver]

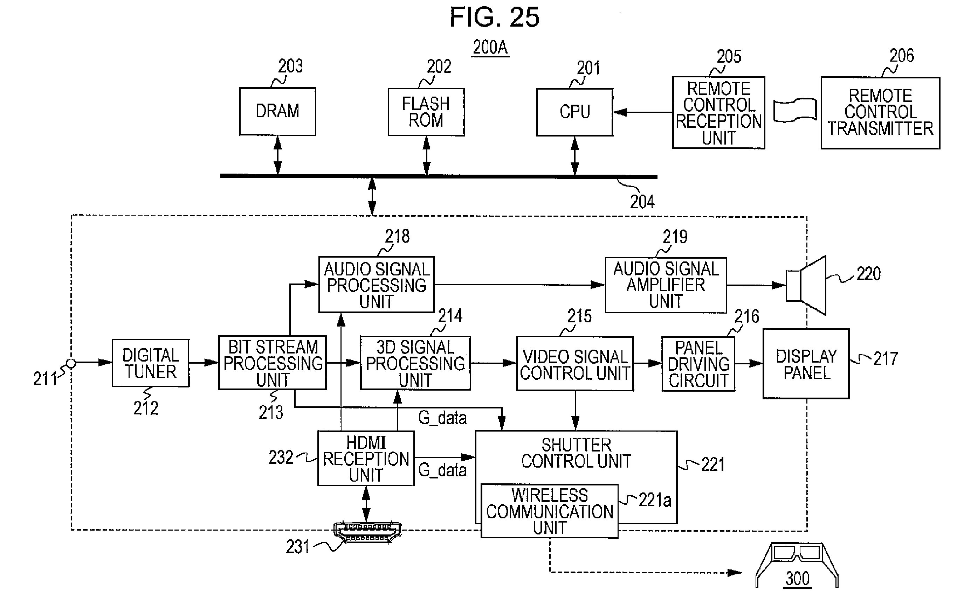

Fig. 25 illustrates a configuration example of the receiver 200A. In Fig. 25, the portions corresponding to Fig. 20 are denoted with the same referential numerals and detailed description thereof will be omitted. This receiver 200 includes a CPU 201, flash ROM 202, DRAM 203, an internal bus 204, a remote control reception unit 205, and a remote control transmitter 206. Also, the receiver 200 includes an antenna terminal 211, a digital tuner 212, a bit stream processing unit 213, a 3D signal processing unit 214, and a video signal control unit 215. Also, the receiver 200 includes a panel driving circuit 216, a display panel 217, an audio signal processing unit 218, an audio amplifier unit 219, a speaker 220, and a shutter control unit 220. Also, the receiver 200 has an HDMI terminal 231 and HDMI reception unit 232.

The HDMI reception unit 232 receives, by communication conforming to HDMI, the image data and audio data, and further advance information (G_data), sent from the HDMI terminal 231 via the HDMI cable 500. This HDMI reception unit 232 is of the version HDMI 1.4 for example, and is in a state capable of handling 3-dimensional image data. Details of this HDMI reception unit 232 will be described later.

The 3D signal processing unit 214 selectively subjects the image data received at the HDMI reception unit 232, or obtained at the bit stream processing unit 213, to processing. The contents of processing at this 3D signal processing unit 214 are the same as with the 3D signal processing unit 214 of the receiver 200 shown in Fig. 20. The audio signal processing unit 218 selectively subjects the audio data received at the HDMI reception unit 232, or obtained at the bit stream processing unit 213, to processing. The contents of processing at this audio signal processing unit 218 are the same as with the audio signal processing unit 218 of the receiver 200 shown in Fig. 20.

The shutter control unit 221 generates shutter control signals to control shutter operations of the shutter glasses 300, based on the advance information (G_data) received at the HDMI reception unit 232, or extracted at the bit stream processing unit 213, predetermined signals generated based on signal processing at the video signal control unit 116, and so forth. In this case, in the event that image display by image data received at the HDMI reception unit 232 is to be performed on the display panel 217, the advance information (G_data) received at the HDMI reception unit 232 is used. On the other hand, in the event that image display by image data extracted at the bit stream processing unit 213 is to be performed on the display panel 217, the advance information (G_data) extracted at the bit stream processing unit 213 is used. The contents of processing at this shutter control unit 221 are the same as with the shutter control unit 221 of the receiver 200 shown in Fig. 20.

While detailed description will be omitted, the receiver 200A shown in Fig. 25 is otherwise the same as with the receiver 200 shown in Fig. 20.

The operations of the receiver 200A shown in Fig. 25 will be described in brief. Operations of using the image data, audio data and advance information (G_data) extracted at the bit stream processing unit 213 are the same as with the receiver 200 shown in Fig. 20, and accordingly will be omitted. Here, only operations of using the image data, audio data and advance information (G_data) received at the HDMI reception unit 232 will be described.

The HDMI reception unit 232 receives the image data, audio data and further advance information (G_data), transmitted from the set top box 400 connected to the HDMI terminal 231 via the HDMI cable 500. The image data (2-dimensional image data, 3-dimensional image data) received at this HDMI reception unit 232 is supplied to the 3D signal processing unit 214. Also, the audio data received at this HDMI reception unit 232 is supplied to the audio signal processing unit 218. Further, the advance information (G_data) received at this HDMI reception unit 232 is supplied to the shutter control unit 221.

When the image data received at the HDMI reception unit 232 is 3-dimensional image data, the 3D signal processing unit 214 performs processing corresponding to the transmission format, and generates and outputs left eye image data and right eye image data for each frame. Also, in the event that the image data received at the HDMI reception unit 232 is 2-dimensional image data, the 3D signal processing unit 214 outputs the 2-dimensional image data as it is. The image data output from the 3D signal processing unit 214 is supplied to the video signal control unit 215.

When left eye image data and right eye image data for each frame is output from the 3D signal processing unit 214, the video signal control unit 215 generates image data for 3-dimensional image display. That is to say, the video signal control unit 215 generates image data for displaying on the display panel 217 in the order of left eye image → right eye image → left eye image → right eye image → ... in a time sharing manner. Also, when 2-dimensional image data is output from the 3D signal processing unit 214, the video signal control unit 215 generates image data for 2-dimensional image display.

The video signal control unit 215 supplies the generated image data to the panel driving unit 216. The panel driving unit 216 drives the display panel 217 based on the image data from the video signal control unit 215, and performs 3-dimensional image display or 2-dimensional image display on the display panel 217. That is to say, with 3-dimensional image display, left eye images and right eye images are displayed on the display panel 217 in a time sharing manner. Also, with 2-dimensional image display, 2-dimensional images are consecutively displayed on the display panel 217.

Also, the audio data received at the HDMI reception unit 232 is supplied to the audio signal processing unit 218. The audio signal processing unit 218 subjects the audio data received at the bit stream processing unit 213 to necessary processing such as D/A conversion or the like. The audio amplifier unit 219 amplifies this audio data, and supplies to the speaker 220. Accordingly, audio corresponding to the displayed image on the display panel 217 is output from the speaker 220.

Predetermined signals generated based on signal processing are supplied from the video signal control unit 215 to the shutter control unit 221. Also, the advance information (G_data) received at the HDMI reception unit 232 is supplied to the shutter control unit 221. The shutter control unit 221 generates shutter control signals such as shutter mode switching commands to control shutter operations of the shutter glasses 300, based on the advance information and so forth.

The shutter control signals are transmitted to the shutter glasses 300 via the wireless communication unit 221a. In this case, the shutter control signals are transmitted in an intermittent manner, from the perspective of suppressing power consumption and the shutter glasses 300 and so forth. Also, in this case, the shutter mode switching commands are transmitted to the shutter glasses 300 before the switching timing between the 2-dimensional image display and 3-dimensional image display. Accordingly, at the shutter glasses 300, at the shutter glasses 300, switching between normal mode and open mode is suitably performed at the switching timing between 3-dimensional image display and 2-dimensional image display.

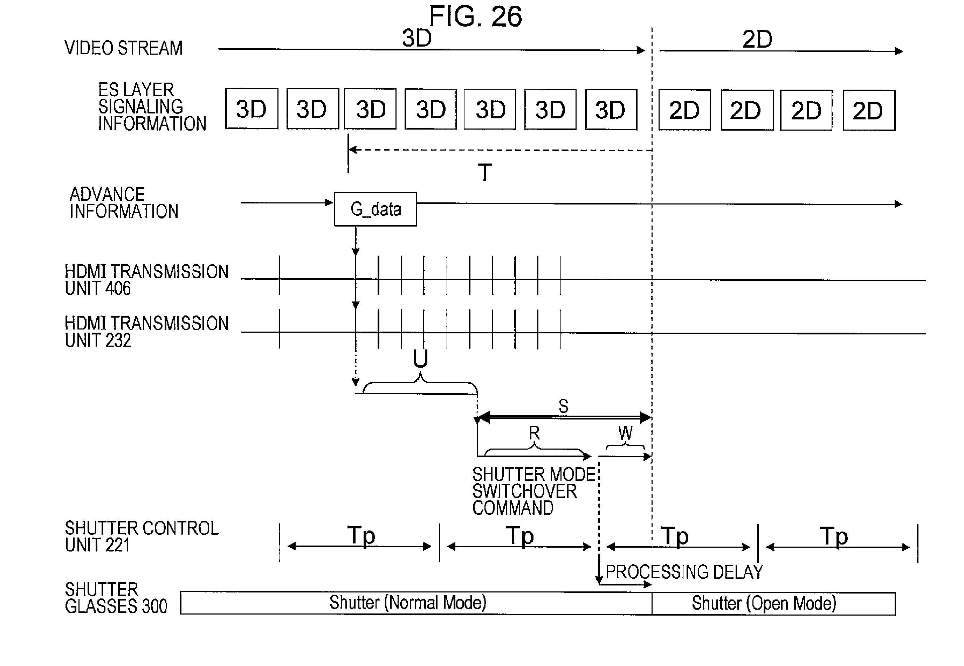

Fig. 26 illustrates the relation between video streams included in a transport stream TS received at the set top box 400, and advance information (G_data) extracted at the bit stream processing unit 401 from this bit stream data. Also, Fig. 26 schematically illustrates transmission timing of shutter mode switching commands from the shutter control unit 221 of the receiver 200A to the shutter glasses 300, based on the advance information (G_data) sent from the set top box 400. Except that the HDMI transmission unit 406 and HDMI reception unit 232 have been introduced, Fig. 26 is the same as Fig. 22, so detailed description thereof will be omitted.

[Configuration Example of HDMI Transmission Unit and HDMI Reception Unit]

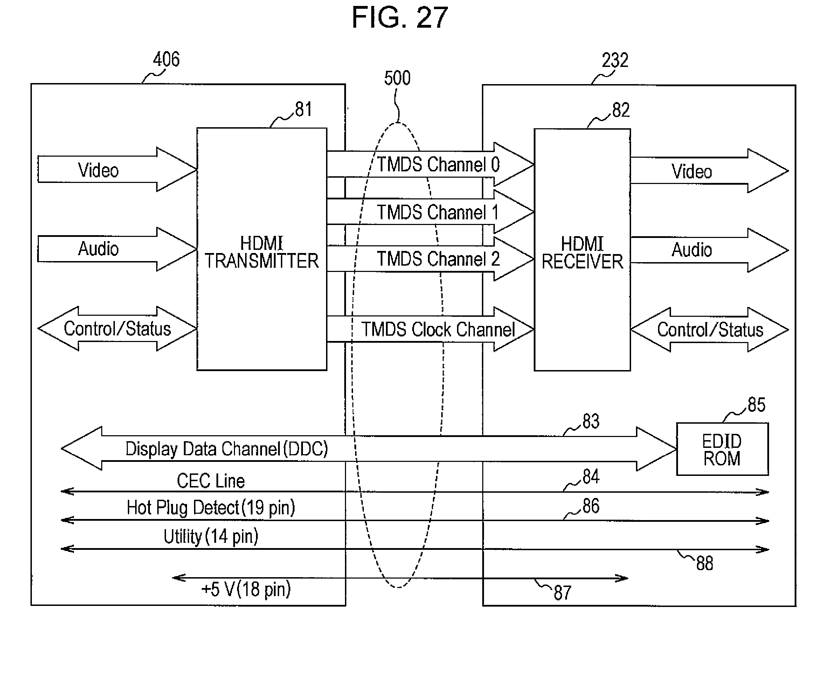

Fig. 27 illustrates, with the image transmission/reception system 10A in Fig. 23, a configuration example of the HDMI transmission unit (HDMI source) 406 of the set top box 400, and the HDMI reception unit (HDMI sink) 232 of the receiver 200A.

The HDMI transmission unit 406 transmits differential signals corresponding to the pixel data of uncompressed one screen worth of image to the HDMI reception unit 232 in one direction using multiple channels during an effective image section (hereafter, also referred to as "active video section"). Here, the effective image section is a section obtained by removing the horizontal blanking section and the vertical blanking section from a section between a certain vertical synchronizing signal and the next vertical synchronizing signal. Also, the HDMI transmission unit 406 transmits differential signals corresponding to the audio data, control data, other auxiliary data, and so forth, following at least an image, to the HDMI reception unit 232 in one direction using multiple channels during the horizontal blanking section or vertical blanking section.

The following transmission channels are provided as the transmission channels of the HDMI system made up of the HDMI transmission unit 406 and the HDMI reception unit 232. Specifically, there are three TMDS channels #0 through #2 serving as transmission channels for serially transmitting pixel data and audio data from the HDMI transmission unit 406 to the HDMI reception unit 232 in one direction in sync with pixel clock. Also, there is a TMDS clock channel serving as a transmission channel for transmitting pixel clock.

The HDMI transmission unit 406 includes an HDMI transmitter 81. The transmitter 81 converts, for example, the pixel data of an uncompressed image into corresponding differential signals, and serially transmits to the HDMI reception unit 232 connected via the HDMI cable 500 in one direction by the three TMDS channels #0, #1, and #2 which are multiple channels.

Also, the transmitter 81 converts audio data following an uncompressed image, further necessary control data and other auxiliary data, and so forth into corresponding differential signals, and serially transmits to the HDMI reception unit 232 in one direction by the three TMDS channels #0, #1, and #2.

Further, the transmitter 81 transmits pixel clock in sync with pixel data transmitted by the three TMDS channels #0, #1, and #2 to the HDMI reception unit 232 connected via the HDMI cable 500 using the TMDS clock channel. Here, with one TMDS channel #i (i = 0, 1, 2), 10-bit pixel data is transmitted during one clock of the pixel clock.

The HDMI reception unit 232 receives the differential signal corresponding to the pixel data transmitted from the HDMI transmission unit 406 in one direction during an active video section using the multiple channels. Also, this HDMI reception unit 232 receives the differential signals corresponding to the audio data and control data transmitted from the HDMI transmission unit 406 in one direction during the horizontal blanking section or vertical blanking section using the multiple channels.

Specifically, the HDMI reception unit 232 includes an HDMI receiver 82. This HDMI receiver 82 receives the differential signal corresponding to the pixel data, and the differential signals corresponding to the audio data and control data, transmitted from the HDMI transmission unit 406 in one direction, using the TMDS channels #0, #1, and #2. In this case, the HDMI receiver receives the differential signals in sync with the pixel clock transmitted from the HDMI transmission unit 406 by the TMDS clock channel.

The transmission channels of the HDMI system include, in addition to the above TMDS channels #0 through #2 and the TMDS clock channel, transmission channels called a DDC (Display Data Channel) 83 and a CEC line 84. The DDC 83 is made up of unshown two signal lines included in the HDMI cable 500. The DDC 83 is used for the HDMI transmission unit 406 reading out E-EDID (Enhanced Extended Display Identification Data) from the HDMI reception unit 232.

Specifically, the HDMI reception unit 232 includes EDID ROM (Read Only Memory) 85 in which the E-EDID that is performance information relating to its own performance (Configuration/capability) in addition to the HDMI receiver 81. The HDMI transmission unit 406 reads out the E-EDID via the DDC 83 from the HDMI reception unit 232 connected via the HDMI cable 500, for example, in response to a request from the CPU 411 (see Fig. 24).

The HDMI transmission unit 406 transmits the read E-EDID to the CPU 411. The CPU 411 stores this E-EDID in the flash ROM 412 or DRAM 413. The CPU 411 recognizes the performance settings of the HDMI reception unit 232 based on the E-EDID. For example, the CPU 411 recognizes whether or not the receiver 200A included in the HDMI reception unit 232 can handle stereoscopic image data, and in the event that stereoscopic image data can be handled, further recognizes what kind of TMDS transmission data structure can be handled.

The CEC line 84 is made up of unshown one signal line included in the HDMI cable 500, and is used for performing bidirectional communication of data for control between the HDMI transmission unit 406 and the HDMI reception unit 232. This CEC line 84 makes up a control data line.

Also, the HDMI cable 500 includes a line (HPD line) 86 connected to a pin called HPD (Hot Plug Detect). The source device can detect connection of the sink device by taking advantage of this line 86. Note that this HPD line 86 is also used as an HEAC- line making up a bidirectional communication path. Also, the HDMI cable 500 includes a line (power supply line) 87 used for supplying power from the source device to the sink device. Further, the HDMI cable 500 includes a utility line 88. This utility line 88 is used as HEAC+ line making up the bidirectional communication path.

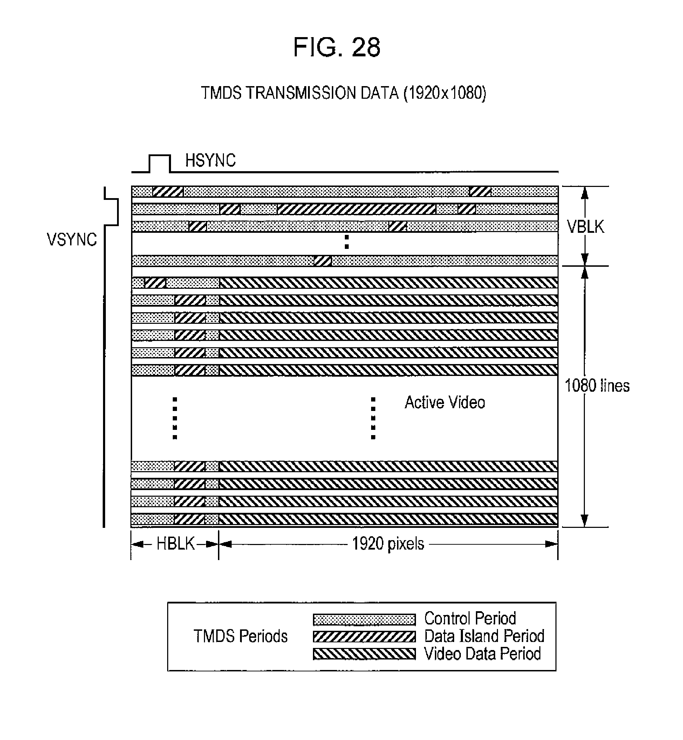

Fig. 28 illustrates a structure example of the TMDS transmission data. This Fig. 28 illustrates the sections of various types of transmission data in the event that image data with width x length of 1920 pixels x 1080 lines is transmitted using the TMDS channels #0, #1, and #2.

With a video field (Video Field) where transmission data is transmitted using the three TMDS channels #0, #1, and #2 of the HDMI, there are three types of sections according to the type of transmission. These three types of sections are a video data section (Vide Data period), a data island section (Data Islandperiod), and a control section (Control period).

Here, a video field section is a section from the leading edge (active edge) of a certain vertical synchronizing signal to the leading edge of the next vertical synchronizing signal. This video field section is divided into a horizontal blanking period (horizontal blanking), a vertical blanking period (verticalblanking), and an active video section (Active Video). This active video section is a section obtained by removing the horizontal blanking period and the vertical blanking period from the video field section.

The video data section is assigned to the active video section. With this video data section, the data of 1920 pixels x 1080 lines worth of effective pixels (Active pixels) making up uncompressed one screen worth of image data is transmitted.

The data island section and control section are assigned to the horizontal blanking period and vertical blanking period. With the data island section and control section, auxiliary data (Auxiliary data) is transmitted. That is to say, the data island section is assigned to a portion of the horizontal blanking period and vertical blanking period. With this data island section, of the auxiliary data, data not relating to control, e.g., the packet of audio data, and so forth are transmitted.

The control section is assigned to another portion of the horizontal blanking period and vertical blanking period. With this control section, of the auxiliary data, data relating to control, e.g., the vertical synchronizing signal and horizontal synchronizing signal, control packet, and so forth are transmitted.

[Method of Transmitting Advance Information (G_data) with HDMI]

A method to transmit advance information (G_data) with the HDMI interface will be described. Here, a method using the HDMI Vendor Specific InfoFrame, will be described, but is not restricted to this. With this method, in an HDMI Vendor Specific InfoFrame paket, 3D_Meta_present = 1 is set, and Vendor Specific InfoFrame extension is specified. In this case, the 3D_Metadata_type is defined as an unused "100", for example, and advance information (G_data) is specified.

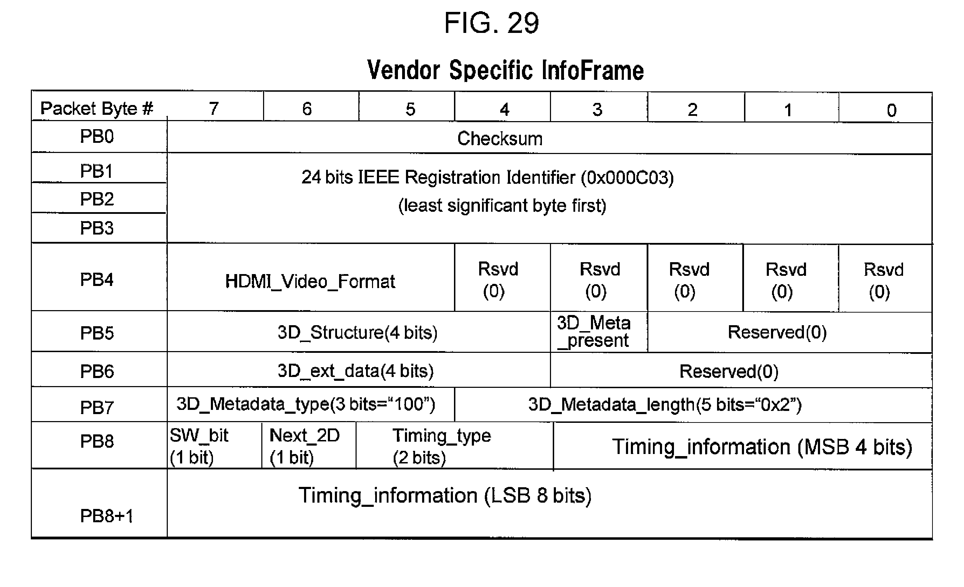

Fig. 29 illustrates the packet structure of the HDMI Vendor Specific InfoFrame. This HDMI Vendor Specific InfoFrame is defined in CEA-861-D, so detailed description thereof will be omitted.

3-bit information "HDMI_Video_Format" indicating the type of image data is situated from the 7th bit to the 5th bit of the 4th byte (PB4). Also, "3D_Meta_present" is situated at the 3rd bit of the 5th byte (PB5), and in the case of specifying Vendor Specific InfoFrame extension, this one byte is set to "1". Also, "3D_Metadata_type" is situated from the 7th bit to the 5th bit of the 7th byte (PB7). In the event of specifying information of advance information (G_data), the information of these three bits is set to an unused "100", for example.

Also, "3D_Metadata_length" is situated from the 4th bit to the 0th bit of the 7th byte (PB7). These five bits of information indicate the length of the 3D_Metadata region to follow. For example, "3D_Metadata_length=27 (0x2)" is set, and the advance information (G_data) is situated with a size of two bytes from the immediately-following byte position (see Fig. 9).

That is to say, "switching_bit" is situated at the 7th bit of the 8th byte (PB8), "next_sequence_2D" is situated at the 6th bit thereof, and "timing_type" is situated at the 5th bit to the 4th bit thereof. Also, "timing_information" is situated from the 3rd bit to 0th bit of the 8th byte (PB8) and the 7th bit to 0th bit of the 8+1'th byte (PB8+1).

<3. Modifications>

Note that with the above-described embodiment, an arrangement has been illustrated where the container is a transport stream (MPEG-2 TS). However, the present invention can be similarly applied to systems of a configuration where distribution is made to a receiving terminal using a network such as the Internet. With Internet distribution, distribution is often performed using MP4 or containers of other formats. That is to say, various types of format containers, such as transport stream (MPEG-2 TS) which has been employed by the digital broadcast standards, MP4 which is used for Internet distribution, and so forth, are applicable.

Industrial Applicability

The present invention can be applied to an image transmission/reception system where a multiplexed stream, including in a time sharing manner a first video stream into which 2-dimensional image data has been inserted and a second video stream into which 3-dimensional image data has been inserted, is transmitted over broadcast waves, or is distributed via a network such as the Internet or the like. Reference Signs List

| 10, 10A | image transmission/reception system |
| 100 | broadcasting station |
| 110, 110A | through 110C transmission data generating unit |
| 111 | data extracting unit |
| 111a | data recording medium |
| 112, 112B | video encoders |
| 113 | audio encoder |
| 114 | advance information generating unit |
| 115 | advance information generating encoder |
| 116, 116C | multiplexers |
| 00, 200A | receivers |
| 201 | CPU |
| 202 | flash ROM |
| 203 | DRAM |
| 211 | antenna terminal |
| 212 | digital tuner |
| 213 | bit stream processing unit |
| 214 | 3D signal processing unit |
| 215 | video signal control unit |
| 216 | panel driving unit |
| 217 | display panel |
| 218 | audio signal processing unit |
| 219 | audio signal amplifier unit |
| 220 | speaker |
| 221 | shutter control unit |
| 221a | wireless communication unit |
| 231 | HDMI terminal |
| 232 | HDNI reception unit |
| 300 | shutter glasses |
| 300L | left eye shutter |
| 300R | right eye shutter |
| 301 | control unit |
| 302 | wireless communication unit |
| 303 | shutter driving unit |
| 304 | glasses unit |
| 400 | set top box |
| 401 | bit stream processing unit |
| 402 | HDMI terminal |
| 403 | antenna terminal |
| 404 | digital tuner |
| 405 | video signal processing circuit |
| 406 | HDMI transmission unit |
| 407 | audio signal processing circuit |
| 411 | CPU |
| 412 | flash ROM |
| 413 | DRAM |
| 500 | HDMI cable |

## Claims

1. A transmitter comprising:

   a transmission unit configured to transmit a multiplexed stream including, in a time sharing manner, a first video stream into which 2-dimensional image data has been inserted and a second video stream into which 3-dimensional image data has been inserted;
   an information inserting unit configured to insert, into said multiplexed stream, advance information which notifies in advance switching between said first video stream and said second video stream.

2. The transmitter according to Claim 1, wherein said advance information has added thereto timing information which indicates an interval from the insertion timing of said advance information until said switching timing.

3. The transmitter according to Claim 2, wherein said advance information has added thereto information indicating whether switching to said first video stream or switching to said second video stream.

4. The transmitter according to Claim 1, wherein said information inserting unit inserts said advance information in a stream which makes up said multiplexed stream and which is independent from said video stream.

5. The transmitter according to Claim 1, wherein said information inserting unit inserts said advance information in a layer at or higher than a picture layer of said video stream.

6. The transmitter according to Claim 5, wherein said information inserting unit inserts said advance information in a header portion of a PES making up said video stream.

7. The transmitter according to Claim 1, wherein said information inserting unit inserts said advance information underneath a program map table included in said multiplexed stream.

8. A transmission method comprising:

   a transmission step to transmit a multiplexed stream including, in a time sharing manner, a first video stream into which 2-dimensional image data has been inserted and a second video stream into which 3-dimensional image data has been inserted;
   an information inserting step to insert, into said multiplexed stream, advance information which notifies in advance switching between said first video stream and said second video stream.

9. A receiver comprising:

   a reception unit configured to receive a multiplexed stream including, in a time sharing manner, a first video stream into which 2-dimensional image data has been inserted and a second video stream into which 3-dimensional image data has been inserted, and further into which has been inserted advance information notifying in advance switching of said first video stream and said second video stream;

a display control unit configured to perform 2-dimensional image display, or 3-dimensional image display where left eye images and right eye images are alternately displayed, on a display unit, based on image data obtained from said video streams included in said multiplexed stream received by said reception unit; and

a shutter control unit configured to transmit a shutter mode switching command to shutter glasses, before switching timing between said 2-dimensional image display and said 3-dimensional image display, based on the advance information obtained from said multiplexed stream received by said reception unit.

10. The receiver according to Claim 9, wherein said shutter mode switching command includes information indicating time until switching the shutter mode.

11. The receiver according to Claim 10, wherein said shutter mode switching command has added thereto information indicating whether switching to a shutter mode corresponding to 2-dimensional image display or switching to a shutter mode corresponding to 3-dimensional image display.

12. A reception method comprising:

a reception step to receive a multiplexed stream including, in a time sharing manner, a first video stream into which 2-dimensional image data has been inserted and a second video stream into which 3-dimensional image data has been inserted, and further into which has been inserted advance information notifying in advance switching of said first video stream and said second video stream;

a display control step to perform 2-dimensional image display, or 3-dimensional image display where left eye images and right eye images are alternately displayed, on a display unit, based on image data obtained from said video streams included in said multiplexed stream received in said reception step; and

a shutter control step to transmit a shutter mode switching command to shutter glasses, before switching timing between said 2-dimensional image display and said 3-dimensional image display, based on the advance information obtained from said multiplexed stream received in said reception step.

13. A receiver comprising:

a reception unit configured to receive a multiplexed stream including, in a time sharing manner, a first video stream into which 2-dimensional image data has been inserted and a second video stream into which 3-dimensional image data has been inserted, and further into which has been inserted advance information notifying in advance switching of said first video stream and said second video stream; and

a data transmission unit configured to transmit to an external device, by way of a transmission path, image data obtained from said video streams included in said multiplexed stream received by said reception unit, and advance information obtained from said multiplexed stream.

14. The receiver according to Claim 13, wherein said data transmission unit transmits said image data to said external device by differential signals, by way of said transmission path, in a plurality of channels; and wherein said advance information is transmitted to said external device by inserting said advance information in a blanking period of said image data.

15. A receiver comprising:

a data reception unit configured to receive from an external device, by way of a transmission path, image data including 2-dimensional image data and 3-dimensional image data in a time sharing manner, and advance information notifying in advance switching between 2-dimensional image data and 3-dimensional image data;

a display control unit configured to perform 2-dimensional image display, or 3-dimensional image display where left eye images and right eye images are alternately displayed, on a display unit, based on image data received by said data reception unit; and

a shutter control unit configured to transmit a shutter mode switching command to shutter glasses, before switching timing between said 2-dimensional image display and said 3-dimensional image display, based on the advance information received by said data reception unit.

16. The receiver according to Claim 15, wherein said shutter mode switching command includes information indicating the time until switching of the shutter mode.

17. The receiver according to Claim 16, wherein said shutter mode switching command has added thereto information indicating whether switching to a shutter mode corresponding to said 2-dimensional image display or switching to a shutter mode corresponding to said 3-dimensional image display.

**18.** A reception method comprising:

a data reception step to receive from an external device, by way of a transmission path, image data including 2-dimensional image data and 3-dimensional image data in a time sharing manner, and advance information notifying in advance switching between 2-dimensional image data and 3-dimensional image data;

a display control step to perform 2-dimensional image display, or 3-dimensional image display where left eye images and right eye images are alternately displayed, on a display unit, based on image data received in said data reception step; and

a shutter control step to transmit a shutter mode switching command to shutter glasses, before switching timing between said 2-dimensional image display and said 3-dimensional image display, based on the advance information received in said data reception step.

# FIG. 1

10

100

200

| BROADCASTING STATION | | RECEPTION DEVICE | |
|---|---|---|---|
| TRANSMISSION DATA GENERATING UNIT ⌐110 | TS ⇒ | SHUTTER CONTROL UNIT ⌐221 | DISPLAY PANEL ⌐217 |

300

# FIG. 2

TIME MANAGEMENT AT TRANSMISSION SIDE

← 2 SECONDS → ← 2 SECONDS →

TIME TO SWITCHOVER TO 2D

TIME TO SWITCHOVER TO 3D

MULTIPLEXED STREAM
- VIDEO STREAM
- ADVANCE INFORMATION

3D      2D      3D

2 SECONDS BEFORE

1 SECOND BEFORE

2 SECONDS BEFORE

1 SECOND BEFORE

EP 2 521 360 A1

# FIG. 3

VIDEO STREAM ——————————— 3D ——————————→ | 2D ——————→

ES LAYER
SIGNALING
INFORMATION

| 3D | 3D | 3D | 3D | 3D | 3D | 3D | | 2D | 2D | 2D | 2D |

ADVANCE
INFORMATION

T

RECEPTION
DEVICE SHUTTER
CONTROL UNIT

SHUTTER MODE
SWITCHOVER
COMMAND

SHUTTER
GLASSES

| Shutter (Normal Mode) | Shutter (Open Mode) |

MODE SWITCHOVER
TIMING

EP 2 521 360 A1

FIG. 4

110A

116

| DATA EXTRACTING UNIT | | VIDEO ENCODER | | MULTIPLEXER | → TS |

EP 2 521 360 A1

# FIG. 5

EXAMPLES OF STEREOSCOPIC IMAGE DATA

L
1920x1080

R
1920x1080

# FIG. 6

"Top & Bottom" FORMAT

(a)

L

R

1920x1080 i/p

"Side By Side" FORMAT

(b)

L    R

1920x1080 i/p

"Frame Sequential" FORMAT

(c)

L
1920x1080 i/p

R
1920x1080 i/p

# FIG. 7

MULTIPLEXED STREAM {
VIDEO
ADVANCE INFORMATION STREAM
}

3D

2D

3D

G_data    G_data    G_data    G_data

2 SECONDS BEFORE    1 SECOND BEFORE    2 SECONDS BEFORE    1 SECOND BEFORE

EP 2 521 360 A1

# FIG. 8
## Transport Stream Association Mechanism

Multiplexed Stream
- EIT
- PMT
  - Program Descriptor
  - Video ES loop
    - -Video Elementary PID
    - -Stream_Type
  - Private ES loop
    - - Pre-Switching Control Elementary PID
    - -Stream_Type
  - Audio ES loop
    - -Audio Elementary PID
    - -Stream_Type

- Packet header PID
  - Video PES
- Packet header PID
  - Pre-Switching Control PES
    - G_data
- Packet header PID
  - Audio PES

EP 2 521 360 A1

# FIG. 9

Syntax of G_data

| Syntax | No. of Bits | Format |
|---|---|---|
| G_data () { | | |
|    switching_bit | 1 | bslbf |
|    next_sequence_2D | 1 | bslbf |
|    timing_type | 2 | bslbf |
|    timing_information | 12 | bslbf |
| } | | |

EP 2 521 360 A1

# FIG. 10
## Semantics of G_data / G_descriptor

| | |
|---|---|
| **descriptor_tag** - | An 8-bit field that identifies the type of descriptor. The value for G_descriptor . |
| **descriptor_length** - | An 8-bit count of the number of bytes following the descriptor_length. |
| **switching_bit** - | A 1-bit field that identifies that whether the video format is changed in next certain period '1' format will be changed, '0' format will not be change |
| **next_sequence_2D** - | A 1-bit field that identifies if the format after change is either 2D or 3D '1' format will be 2D, '0' format will be 3D |
| **timing_type** - | A 2-bit field that identifies data type of timing information specifying the distance timing to format change |
| | '00'  STC based timestamp grid (90 KHz base) |
| | '01'  Video frame count |
| | '10'  Counts of 0.5 second base |
| | '11'  Counts of 1 second base |
| **timing_information** - | A 14-bit field that identifies the timing distance to the timing of format change. Timing information is based on target video frame frequency. |

EP 2 521 360 A1

# FIG. 11

*110B*

DATA EXTRACTING UNIT

*111a*

DATA RECORDING MEDIUM

*111*

*112B*

VIDEO ENCODER

*116*

MULTIPLEXER → TS

AUDIO ENCODER

*113*

ADVANCE INFORMATION GENERATING UNIT

*114*

EP 2 521 360 A1

FIG. 12

# FIG. 13

| PES header | picture |    | picture |    | picture |

If( PES_extension_flag = =1 &&
    PES_Private_data_flag ==1 )

**128 bits is assigned to
PES_private_data**

| Syntax | No. of Bits | Format |
|---|---|---|
| PES_private_data () { | | |
|    private_data_type | 8 | bslbf |
|    G_data_length | 8 | bslbf |
|    G_data() | | |
|    reserved | | |
| } | | |

FIG. 14

EP 2 521 360 A1

PES STREAM

VIDEO

PES header

3D

□ G_data

⬆
2 SECONDS BEFORE

□ G_data

⬆
1 SECOND BEFORE

2D

□ G_data

⬆
2 SECONDS BEFORE

□ G_data

⬆
1 SECOND BEFORE

3D

# FIG. 15

## Transport Stream Association Mechanism

```
Multiplexed Stream
   │        │                              │
   │        └──────────────┐              │
   │                    EIT │              │
   PMT                                     │
    │                                      │
    ├── Program Descriptor                 │
    │                                      │
    ├── Video ES loop                      │      Packet header PID
    │        │                             │           Video PES
    │        └── -Video Elementary PID     │              └ G_data
    │            -Stream_Type              │
    │                                      │
    │                                      │      Packet header PID
    ├── Audio ES loop                      │           Audio PES
    │        │                             │
    │        └── -Audio Elementary PID     │
    │            -Stream_Type              │
```

EP 2 521 360 A1

## FIG. 16

110C

DATA
EXTRACTING UNIT

111a

DATA RECORDING
MEDIUM

111

112

VIDEO
ENCODER

116C

MULTIPLEXER → TS

AUDIO
ENCODER

113

ADVANCE
INFORMATION
GENERATING UNIT

114

EP 2 521 360 A1

# FIG. 17

# FIG. 18

## Transport Stream Association Mechanism

# FIG. 19

## Syntax of G_descriptor

| Syntax | No. of Bits | Format |
|---|---|---|
| G_descriptor () { | | |
| descriptor_tag | 8 | uimslbf |
| descriptor_length | 8 | uimslbf |
| switching_bit | 1 | bslbf |
| next_sequence_2D | 1 | bslbf |
| timing_type | 2 | bslbf |
| timing_information | 12 | bslbf |
| } | | |

EP 2 521 360 A1

# FIG. 20

<u>200</u>

EP 2 521 360 A1

# FIG. 21

300

304

300L

300R

302

303

WIRELESS COMMUNICATION UNIT

SHUTTER DRIVING UNIT

LEFT EYE SHUTTER

RIGHT EYE SHUTTER

CONTROL UNIT

301

# FIG. 22

VIDEO STREAM — 3D — 2D

ES LAYER SIGNALING INFORMATION: PTSn
3D 3D 3D 3D 3D 3D 3D | 2D 2D 2D 2D

T

ADVANCE INFORMATION: PTSn
G_data

U

S

R W

SHUTTER CONTROL UNIT 221

Tp Tp Tp Tp

SHUTTER MODE SWITCHOVER COMMAND

PROCESSING DELAY

SHUTTER GLASSES 300: Shutter (Normal Mode) | Shutter (Open Mode)

EP 2 521 360 A1

# FIG. 23

10A

| BROADCASTING STATION | | STB | | RECEPTION DEVICE | |
| TRANSMISSION DATA GENERATING UNIT ~110 | | | | SHUTTER CONTROL UNIT ~221 | DISPLAY PANEL ~217 |

100 · 400 · 200A

TS · 500 · 402 · 231 · 300

EP 2 521 360 A1

# FIG. 24

## FIG. 25

200A

EP 2 521 360 A1

# FIG. 26

EP 2 521 360 A1

# FIG. 27

EP 2 521 360 A1

# FIG. 28

TMDS TRANSMISSION DATA (1920x1080)

# FIG. 29

## Vendor Specific InfoFrame

| Packet Byte # | 7 | 6 | 5 | 4 | 3 | 2 | 1 | 0 |
|---|---|---|---|---|---|---|---|---|
| PB0 | Checksum | | | | | | | |
| PB1 | 24 bits IEEE Registration Identifier (0x000C03) (least significant byte first) | | | | | | | |
| PB2 | | | | | | | | |
| PB3 | | | | | | | | |
| PB4 | HDMI_Video_Format | | | Rsvd (0) | Rsvd (0) | Rsvd (0) | Rsvd (0) | Rsvd (0) |
| PB5 | 3D_Structure(4 bits) | | | | 3D_Meta _present | Reserved(0) | | |
| PB6 | 3D_ext_data(4 bits) | | | | Reserved(0) | | | |
| PB7 | 3D_Metadata_type(3 bits="100") | | | | 3D_Metadata_length(5 bits="0x2") | | | |
| PB8 | SW_bit (1 bit) | Next_2D (1 bit) | Timing_type (2 bits) | | Timing_information (MSB 4 bits) | | | |
| PB8+1 | Timing_information (LSB 8 bits) | | | | | | | |

EP 2 521 360 A1

## INTERNATIONAL SEARCH REPORT

| International application No. |
| --- |
| PCT/JP2011/077994 |

A. CLASSIFICATION OF SUBJECT MATTER
*H04N13/00*(2006.01)i

According to International Patent Classification (IPC) or to both national classification and IPC

B. FIELDS SEARCHED

Minimum documentation searched (classification system followed by classification symbols)
H04N13/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2005-6114 A (Sharp Corp.),<br>06 January 2005 (06.01.2005),<br>paragraphs [0170] to [0171]<br>(Family: none) | 1-8,13<br>9-12,14-18 |
| A | JP 62-231578 A (Sanyo Electric Co., Ltd.),<br>12 October 1987 (12.10.1987),<br>entire text; all drawings<br>(Family: none) | 9-12,15-18 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>   07 February, 2012 (07.02.12) | Date of mailing of the international search report<br>   14 February, 2012 (14.02.12) |
| Name and mailing address of the ISA/<br>   Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9138384 A
- JP 2000036969 A
- JP 2003045343 A